(19) Europäisches Patentamt
European Patent Office
Office européen des brevets

(11) Publication number: **0 351 180 A2**

(12) **EUROPEAN PATENT APPLICATION**

(21) Application number: 89307017.7

(22) Date of filing: 11.07.89

(51) Int. Cl.$^5$: G 06 F 15/20

(30) Priority: 12.07.88 JP 173263/88

(43) Date of publication of application: 17.01.90 Bulletin 90/03

(84) Designated Contracting States: DE FR GB IT

(71) Applicant: BROTHER KOGYO KABUSHIKI KAISHA
35, 9-chome, Horita-dori Mizuho-ku
Nagoya-shi, Aichi-ken (JP)

(72) Inventor: Kawakami, Yasushi c/o Brother Kogyo K. K.
35, 9-chome, Horita-dori Mizuho-ku
Nagoya-shi Aichi-ken (JP)

Morimoto, Yoshinari c/o Brother Kogyo K. K.
35, 9-chome, Horita-dori Mizuho-ku
Nagoya-shi Aichi-ken (JP)

Furukawa, Akihiro c/o Brother Kogyo K. K.
35, 9-chome, Horita-dori Mizuho-ku
Nagoya-shi Aichi-ken (JP)

Makihara, Kayoko c/o Brother Kogyo K. K.
35, 9-chome, Horita-dori Mizuho-ku
Nagoya-shi Aichi-ken (JP)

(74) Representative: Senior, Alan Murray et al
J.A. KEMP & CO 14 South Square Gray's Inn
London WC1R 5EU (GB)

(54) **Text processing system having means for checking entered words for different types of errors.**

(57) A text processing system including an input device for entering text data, a memory for storing the text data entered through the input device, a word-error checking device for checking a word represented by word data included in the text data, in terms of a plurality of types of errors associated with the word, and a word-error indicator which is operable upon determination by the word-error checking device of the presence of at least one of the types of error of the word. The indicator provides an indication of the type or types of errors of the erroneous word detected by the checking device.

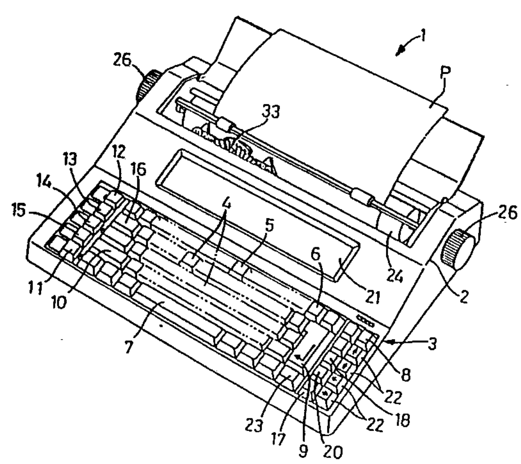


FIG. 1

EP 0 351 180 A2

## Description

# TEXT PROCESSING SYSTEM HAVING MEANS FOR CHECKING ENTERED WORDS FOR DIFFERENT TYPES OF ERRORS

## BACKGROUND OF THE INVENTION

### Field of the Invention

The present invention relates in general to a text processing system which has a function of checking entered words for the presence of errors, and more particularly to a technique for checking the words in terms of different types of errors.

### Discussion of the Prior Art

In a computer-controlled data or text processing apparatus such as an electronic typewriter and a word processor, it is known to provide a spell check function of checking an entered succession of characters for the presence of a spelling error. An example of a text processing apparatus having such a spell check function is disclosed in pending U.S. Patent Application No. 90,364 filed on August 28, 1987.

In the apparatus disclosed in this publication, a desired one of four word-correction modes or options are selected from a word-correction menu which is displayed upon detection of a misspelled word.

However, an entered succession of characters may be an erroneous word when the word consisting of the succession of characters is erroneous in terms of the capitalization and/or hyphenation, as well as when the word is erroneous in terms of the spelling. Thus, there are different types of errors associated with an entered succession of characters (which is generally keyed in as a word). It is recognized that the manner of effectively or efficiently correcting, revising or otherwise dealing with a detected erroneous word differs depending upon the type or types of errors which exists in the word.

The present invention, provides a text processing system, comprising: (a) input means for entering text data; memory means for storing the text data entered through the input means; (b) word-error checking means for checking a word represented by word data included in the text data, in terms of a plurality of types of errors associated with the word; and (c) word-error indicating means, operable upon determination by the word-error checking means of the presence of at least one type of error in the word, for providing an indication indicating the type or types of errors of the erroneous word.

In the text processing system constructed according to the principle of the present invention as described above, upon determination or detection by the word-error checking means of any error or errors in the entered word, the word-error indicating means indicates the type of error or types of errors in the erroneous word. Accordingly, the operator may recognize what is wrong with the word, by observing the indication provided on the word-error indicating means. If the system is adapted to be operable in two or more modes in which the erroneous word may be corrected, revised or otherwise dealt with, the operator may easily select one of these modes of revision or correction of the word, depending upon the type or types of errors which exist in the word. Even if such modes of revision are not available, the indication of the type or types of errors of the erroneous word effectively aids the operater in determining a necessary procedure to deal with the error or errors, thereby improving the efficiency of preparing, editing or otherwise processing a text or document.

The word-error indicating means may be adapted to indicate the erroneous word, as well as the type or types of errors of the erroneous word.

The types of errors to be checked by the word-error checking means may include at least two types of errors which are selected from among three types consisting of a normal spelling error constituted by misspelling of the word, a capitalization error constituted by erroneous capitalization of the word, and a hyphenation error constituted by erroneous hyphenation of the word.

The text processing system may use a dictionary memory which stores multiple sets of word data representative of a multiplicity of words. At least one of the multiple sets of word data comprises character data which represents characters of the corresponding word, without distinction between upper-case and lower-case characters, and capitalization data representative of a position of at least one of the characters of the word which should be capitalized. In this case, the word-error checking means checks the word for the presence of the capitalization error, based on the capitalization data.

The word-error checking means may be adapted to check whether a character which is entered through the input means following a period is capitalized or not, and thereby determine whether the first character of the word is capitalized or not. The word-error checking means determins that the word in question has a capitalization error if the character following the period is not capitalized.

The word-error checking means may be adapted to check whether a first character which is entered first through the input means after commencement of entry of the text data is capitalized or not, and determines that the word has a capitalization error if the first character is not capitalized.

The text processing system may use a dictionary memory which stores multiple sets of word data representive of multiple words. Some of the multiple sets of word data comprise character data which represents a succession of characters of the corresponding word, and hyphenation data representative of at least one hyphenation point at which the corresponding word is hyphenated at the end of a line of characters. In this instance, the word-error checking means checks the word data included in the text data stored in the memory means, against the hyphenation data of the corresponding set of word data stored in the dictionary memory, in order to determine whether the relevant word has a hypenation error. The hyphenation error is constituted if a position of a hyphen indicated by the word data in the memory means does not coincide with any one of the at least one hyphenation point represented by the hyphenation data.

In the above form of the invention, the multiple sets of word data may include at least one set of word data representative of a compound word which consists of two successions of characters and one hyphen connecting the two successions of characters. In this case, the word-error checking means checks a word which is stored in the memory means and which includes at least one hyphen, by first determining whether or not the multiple sets of word data stored in the dictionary memory include the word data representative of the word which is stored in the memory means and which includes at least one hyphen, and then determining, if the mutliple sets of word data do not include the word data representative of the word stored in the memory means, whether the multiple sets of word data include the word data representative of a word which consists of the two successions of characters without one of the above-indicated at least one hyphen. If the compound word stored in the memory means includes a plurality of hyphens, the word-error checking means may determine whether the multiple sets of word data stored in the dictionary memory include the word data representative of any one of words which consist of successions of characters and at least one hyphen which is selected by selectively eliminating one of the plurality of hyphens one after another.

## BRIEF DESCRIPTION OF THE DRAWINGS

The above and other objects, features and advantages of the present invention will be readily appreciated by reading the following detailed description of a presently preferred embodiment of the invention, when considered in connection with the accompanying drawings, in which:

Fig. 1 is a perspective view showing an outer appearance of a typewriter which incorporates one embodiment of a text processing system of the present invention;

Fig. 2 is a fragmentary side elevational view in cross section of the typewriter of Fig. 1;

Fig. 3 is a view showing the typewriter in an operating position different from that of Fig. 2;

Figs. 4A and 4B are block diagrams showing a control system of the typewriter;

Figs. 5A, 5B, 6A, 6B, 7, 8, 9A, 9B, 10A and 10B are flow charts illustrating control programs closely associated with the principle of the present invention, which are stored in a program memory of the control system of Fig. 4;

Figs. 11 and 12 are views illustrating indications on a display of the typewriter, which are provided when a SUGGESTION mode is selected upon detection of a spelling error;

Figs. 13(a) and 13(b) are views illustrating indications on the display, which are provided when the SUGGESTION mode is selected upon detection of capitalization and hyphenation errors;

Fig. 14 is a view illustrating an indication on the display, which is provided when an AMEND mode is selected upon detection of a capitalization error; and

Figs. 15(a) and 15(b) are views illustrating indications on the display, which are provided when the SUGGESTION mode is selected upon detection of a hyphenation error.

## DETAILED DESCRIPTION OF THE PREFERRED EMBODIMENT

Referring first to Fig. 1, a typewriter 1 has a keyboard 3 disposed in a front portion of a main frame 2, and a printing mechanism incorporated in a rear portion of the main frame 2.

The keyboard 3 has various keys which include: character keys including alphabet keys 4, numeral keys 5 and symbol keys 6; a space key 7; a backspace key 8; a CARRIAGE RETURN key 9; a SHIFT key 10; a CODE key 11; a LEFT MARGIN SET key 12; a RIGHT MARGIN SET key 13; a TAB SET key 14; a TAB CLEAR key 15; a TAB key 16; a SPELL CHECK key 17; a DELETE key 18; a CANCEL key 20; CURSOR keys 22 for moving a cursor which is provided on a display 21, to indicate the position at which data can be entered and edited; and an ERASE key 23 for producing an ERASE command.

The functions of the function keys indicated above (the keys except for the character keys) are similar to those of the function keys used in a known typewriter, and will not be described herein.

The display 21 indicated above is provided between the keyboard 3 and the printing mechanism, for displaying characters which are entered through the character keys 4, 5, 6. The printing mechanism includes a platen 24 which is disposed so as to extend laterally of the main frame 2. The platen 24 is rotated either automatically by a platen drive motor 25 (Fig. 4A) or manually by means of platen knobs 26, for feeding a recording medium in the form of a paper sheet P.

The printing mechanism further includes a carriage 27 which is slidably supported by two guide rods 29, 30 extending parallel to a platen shaft 28 on which the platen 24 is mounted. The carriage 27 is reciprocated right and left along the platen 24, by a carriage drive motor 31 (Fig. 4A) via a carriage drive wire 32.

The carriage 27 carries a wheel drive motor 34, and a print wheel 33 rotated or indexed by the motor 34. More specifically, the print wheel 33 is housed in a wheel cassette 35, and is removably attached to an output shaft of the wheel drive motor 34. With the motor 34 operated by a suitable amount, the print wheel 33 is indexed such that a selected type font 36 at the end of the appropriate radial arm of the print wheel 33 is brought into a printing position at which the type font 36 is aligned with a print hammer 37. The print hammer 37 is mounted on the top of the carriage 27, so that the currently selected type font 36 in the printing position is impacted by the print hammer 37, against the paper sheet P, when the hammer 37 is activated upon energization of a hammer solenoid 38 by an electric current applied from a print hammer solenoid driver 39 (Fig. 4A).

The carriage 27 also carries a holder 42 on which is mounted a ribbon cassette 41 accommodating a print ribbon 40. The holder 41 is pivotally supported at its front end by the carriage 27. The print ribbon 40 supplied from a supply spool of the cassette 41 is rewound on a take-up spool of the cassette 41. The take-up spool is rotated by a ribbon feed motor 43 (Fig. 4A), whereby the print ribbon 40 is fed between the platen and the print wheel 33. In a lower rear portion of the holder 42, there is provided a correction ribbon 44. Namely, a supply spool for supplying the correction ribbon 44 is disposed in a right-hand side section of the ribbon cassette 41, while a take-up spool for rewinding the ribbon 44 is disposed in a left-hand side section of the cassette 41.

The carriage 27 further has a cam mechanism (not shown) which is connected to a drive shaft rotated by a ribbon lift motor 45. With this ribbon lift motor 45 operated by suitable amounts, the holder 42 indicated above is pivoted by the cam mechanism, for moving an active portion of the print ribbon 40 selectively to the printing position of Fig. 2 or the rest position (not shown), and positioning an active portion of the correction ribbon 44 to the erasing position of Fig. 3. In the printing or erasing position, the active portion of the print ribbon 40 or correction ribbon 44 is located between the currently selected type font 36 in the printing position and the platen 24. The rest position of the print ribbon 40 is located below the printing position. In other words, the holder 42 is pivotable to one of the three positions indicated above.

The take-up spool for rewinding the correction ribbon 44 is driven by a correction ribbon take-up mechanism (not shown) which is associated with the carriage 27 and holder 42. This take-up mechanism is activated when the holder 42 is pivoted to the erasing position.

It will be understood that the printing mechanism of the typewriter 1 is substantially constituted by the platen 24 and the platen drive device, the carriage 27 and the carriage drive device, the print wheel 33 and the wheel drive device, the print ribbon 40 and the ribbon feed drive device, the cam mechanism for moving the active portion of the ribbon 40 to the printing position, the device for driving the cam mechanism, the print hammer 37 and the hammer drive device. The drive devices indicated above are connected to a central processing unit (CPU) 46 of a controller C, as indicated in Fig. 4A.

Then, a control system of the typewriter 1 which includes the controller C will be described by reference to the block diagram of Figs. 4A and 4B.

In Fig. 4A, reference characters PM denote driver means of the printing mechanism of the typewriter 1. The driver means PM includes: the platen drive motor 25, a driver 47 for driving the motor 25, the carriage drive motor 31, a driver 48 for driving the motor 31, the ribbon feed motor 43, a driver 49 for driving the motor 43, the ribbon lift motor 45, a driver 50 for driving the motor 45, the print wheel drive motor 34, a driver 51 for driving the motor 34, the print hammer solenoid 38, and the driver 39 for driving the solenoid 38.

The typewriter 1 has a display device D which consists of the display 21, and a display controller 52. The display 21 is a liquid crystal display which is capable of displaying characters such as letters, according to display data stored in the display controller 52. The display data supplied to the display 21 correspond to code data which are entered into the display controller 52 and which are representative of characters to be displayed.

As shown in Fig. 4B, the controller C includes the CPU 46 indicated above, and a read-only memory (ROM) 53 and a random-access memory (RAM) 54 which are connected to the CPU 46. To the CPU 46, there are connected the keyboard 3, the various drivers 39 and 47-51 of the driver means PM, and the display controller 52.

The ROM 53 incorporates a PROGRAM memory 100, a DICTIONARY memory 102, and a WORD-SEPARATION DATA memory 104. The PROGRAM memory 100 stores various control programs which includes: programs for controlling the drive motors 25, 31, 34, 43, 45, the print hammer solenoid 38 and the display 21, according to code data representative of characters (inlcuding spaces), which are entered through the character keys 4, 5, 6, space key 7 and the other keys on the keyboard 3; control programs for controlling the motors 25, 31, 34, 43, 45 and the print hammer solenoid 38, according to code data entered through the various function keys on the keyboard 3; control programs for effecting word-error checking operations as illustrated in the flow charts of Figs. 5A, 5B, 6A, 6B and 7; and control programs for effecting word retyping, amending and replacing operations as illustrated in the flow charts of Figs. 9A, 9B, 10A and 10B. The DICTIONARY memory 102 stores multiple sets of word data representative of a multiplicity of words, for example, about 70,000 words, which are used to effect the word-error checking operations. The words stored in this DICTIONARY memory 102 are arranged in an alphabetical order, as in an ordinary dictionary. The WORD-SEPARATION DATA memory 104 stores word-separation data representative of a spacing movement, a carriage return, a tab setting, a period, a semi-colon, a comma, etc. In the DICTIONARY memory 102, the word data of an ordinary word include character data representative of characters of the word, while the word data of a word such as a proper noun including a capital letter or letters further includes capitalization data representative of a position of at least one character of the word which should be capitalized. The DICTIONARY memory 102 includes sets of word data representative of compound words each of which consists of two or more ordinary words, i.e., two or more successions of characters, and at least one hyphen connecting the successions of characters. In this case, the hyphen or hyphens are processed or treated as ordinary alphabetic letters. It is also noted that the word data of a word which consists of two or more syllables further includes hyphenation data representative of at least one hyphenation point at which the word should be hyphenated at the end of a line of characters. If a word has two or more hyphenation points, the word data of this word includes hyphenation data which indicate all of these hyphenation points, as well as the character data.

The RAM 54 includes a buffer memory 106 for storing word data representative of a succession of characters, which is currently entered and which is to be checked for any entry errors. The RAM 54 further includes a LEADING SYMBOL memory 107, and a TRAILING SYMBOL memory 108, and an ALPHABETIC DATA memory 110. The LEADING SYMBOL memory 107 and the TRAILING SYMBOL memory 108 respectively store leading symbol data and trailing symbol data which are parts of the word data stored in the buffer memory 106. The leading symbol data represent a symbol or symbols which precede a succession of alphabetic letters (word), while the trailing symbol data represent a symbol or symbols which follow the succession of alphabetic letters. The ALPHABETIC DATA memory 110 stores alphabetic data of the word data stored in the buffer memory 106. The alphabetic data represent the alphabetic letters of the succession of characters. --"America"--, --[Chapter]--, --Happy?--, and --shaft10-- are examples of such succession of characters including leading and/or trailing symbols. In this connection, it is noted that the charcters other than the alphabetic letters are referred to as the symbols. For example, the numerals "1" and "0" in the above example of --shaft10-- are referred to as trailing symbols. In the above four examples of the successions of characters, the buffer memory 106 stores the word data as --"America"--, --[Chapter]--, --Happy?--, and --shaft10--, and the LEADING SYMBOL memory 107 stores the leading symbol data as --"-and --[--. Further, the ALPHABETIC DATA memory 110 stores the alphabetic data as --America--, --Chapter--, --Happy-and --shaft--, and the TRAILING SYMBOL memory 108 stores the trailing symbol data as --"--, --]--, --?-- and --10--.

The RAM 54 further includes: a PRINT DATA memory 112 for storing a series of word data representative of a series of characters (letters) which have been already printed, such that the sets of character data correspond to the positions at which the characters are printed; a CURRENT POSITION memory 114 for storing position data indicative of a current position of the carriage 27; a WHEEL POSITION memory 116 for storing wheel position data indicative of a current angular position of the print wheel 33, i.e., the number of the radial arm of the wheel 33 which has the type font 36 positioned in the printing position; a WORD-SEPARATION DATA buffer 118 for temporarily storing word-separation data indicative of a spacing movement of the carriage 27, a carriage return, a period, a semi-colon, a comma, etc.; a DELETE flag 120 (which will be described); a CAPITALIZATION ERROR flag 122 indicating a capitalization error of a word; a HYPHENATION ERROR flag 124 indicating a hyphenation error of a word; and various working memories for temporarily storing results of arithmetic operations by the CPU 46.

The CPU 46 operates to control the driver means PM according to code data such as word data including character data representative of alphabetic letters, numerals and symbols, which are entered through the character keys 4, 5, 6 and other keys on the keyboard 3, whereby the characters are printed on the paper sheet P. At the same time, the CPU 46 stores the received word data into the buffer memory 106, and effects word-error checking operations for each entered word, i.e., for each succession of characters which preceds a word-separation code (word-separation data) such as a space code. The word-error checking operations are executed according to the control program illustrated in Figs. 5A and 5B, and by using the DICTIONARY memory 102.

The CPU 46 stores in the PRINT DATA memory 112 of the RAM 54 the sequentially received series of word data representative of the characters (letters) which have been already printed, such that the sets of character data correspond to the positions at which the characters are printed. Further, the CPU 46 updates the data stored in the CURRENT POSITION memory 114 and WHEEL position memory 116, as the carriage drive motor 31 and the print wheel drive motor 34 are operated, so that the data in the memory 114 represents the current position of the carriage 27 while the data in the memory 116 represents the currently selected type font 36 of the print wheel 33.

The CPU 46 processes the code data received from the various function keys on the keyboard 3, according to the appropriate control programs stored in the PROGRAM memory 100 of the ROM 53, and applies control signals corresponding to the received code data, to the various drivers 39 and 47-51 and to the display controller 52.

At the same time, the CPU 46 processes the code data received from the character keys 4, 5, 6 and space key 7 on the keyboard 3, or the character data retrieved from the PRINT DATA memory 112, according to the appropriate control programs stored in the PROGRAM memory 100. The CPU 46 applies control signals corresponding to the received character data, to the drivers 39, 47-51 of the driver means PM and to the display controller 52. Thus, the printing mechanism and the display device D of the typewriter 1 are controlled according to the various code data received by the CPU 46.

Described in greater detail, the CPU 46 applies a control signal to the wheel motor driver 51 of the driver means PM, according to received character data, whereby a controlled drive current is applied from the driver 51 to the print wheel drive motor 34, so as to index the print wheel 33 by a suitable angle. As a result, the type font 36 corresponding to a character represented by the received character data is brought into the printing position in front of the print hammer 37. At the same time, the CPU 46 applies a control signal to the ribbon lift motor driver 50, whereby a drive current is applied from the driver 50 to the ribbon lift motor 45. A rotary motion of the motor 45 is imparted to the drive shaft and cam mechanism indicated above, and the holder 42 and the print ribbon 40 are brought to the printing position of Fig. 2.

Subsequently, the CPU 46 applies a control signal to the print hammer solenoid driver 39, whereby a drive current is applied from the driver 39 to the print hammer solenoid 38, so that the currently selected type font 36 is impacted against the paper sheet P, by the print hammer 37. Thus, the character corresponding to the type font 36 is printed on the sheet P.

If the CPU 46 does not receive any data for a predetermined time, a control signal is applied to the ribbon lift motor driver 50, to activate the ribbon lift motor 45 for restoring the holder 42 and print ribbon 40 to the rest position.

The CPU 46 also applies control signals to the carriage motor driver 48 and ribbon feed motor driver 49. As a result, a controlled drive current is applied from the motor driver 48 to the carriage drive motor 31, so that the carriage 27 is fed in the printing direction through the drive wire 32, by a predetermined incremental distance equal to a character-to-character distance. Concurrently, a controlled drive current is applied from the motor driver 49 to the ribbon feed motor 43, so that the print ribbon 40 is fed by the predetermined incremental distance.

When the CARRIAGE RETURN key 9 on the keyboard 3 is operated, the CPU 46 processes the corresponding carriage return code data according to the control program stored in the PROGRAM memory 100, and applies control signals to the carriage motor driver 48 and platen motor driver 47. As a result, a drive current is applied from the motor driver 48 to the carriage drive motor 31, so that the motor 31 is operated in the reverse direction to return the carriage 27 to the printing start position. At the same time a drive current is applied from the motor driver 47 to the platen drive motor 25, so that the motor 25 is rotated to rotate the platen 24 by a suitable angle to feed or advance the paper sheet P to the next print line, namely, by a distance equal to a selected line spacing.

When the ERASE key 23 is operated to erase a character already printed on the paper sheet P, the CPU 46 retrieves from the PROGRAM memory 100 of the ROM 53 a character erasing control program, and applies a control signal to the ribbon lift motor driver 50. Consequently, the ribbon lift motor 45 is operated to pivot the holder 42 to the erasing position of Fig. 3. Then, the CPU 46 retrieves from the PRINT DATA memory 112 the set of character data which corresponds to the current printing position of the carriage 27 which is represented by the data stored in the CURRENT POSITION memory 114 of the RAM 54. According to the retrieved character data, a control signal is applied to the wheel motor driver 51, to apply a controlled drive current to the print wheel motor driver 34, to rotate the print wheel 33 so that the type font 36 corresponding to the character to be erased is brought into the printing position. Then, the print hammer solenoid 38 is activated by a drive current supplied from the print hammer solenoid driver 39, whereby the print hammer 37 impacts the type font 36 against the paper sheet P. Thus, the character is erased by means of the correction ribbon 44.

When the characters whose character data are stored in the buffer memory 106 are erased, the character data are deleted from the buffer memory 106.

As described later in detail, the present typewriter 1 is operable in a word-error checking mode for checking a set of word data for the presence of any types of errors associated with the corresponding character. If an error or errors is/are detected, the type or types of errors is/are indicated on the display 21, and the operator may select a desired one of four modes from a word-error correcting menu: IGNORE, RETYPE, AMEND and SUGGESTION. The IGNORE mode is selected when the operator desires to continue a typing operation without any correction of the word in question. This situation occurs when the word does not in fact have any error, for example, when the word is a proper noun which is not found in the DICTIONARY memory 102. The RETYPE mode is selected to first erase the erroneous word and then retype a correct word by the operator. The AMEND mode is used to correct the erroneous word by editing the word by addition, deletion and replacement of a character or characters. The SUGGESTION mode is selected when the operator desires to find a correct word in place of the erroneous word, from a list of candidates indicated on the display 21, and replace the erroneous word by the selected correct word.

There will be described in detail the word-error checking operation and the word correcting operations which have been briefed above. By reference to the flow charts of Figs. 5A, 5B, 6A and 6B, the word-error checking routine will be first explained.

Upon operation of the SPELL CHECK key 17, the control flow goes to step S1 of Fig. 5A in which the word-error checking mode is established. Step S1 is followed by step S2 wherein the display 21 provides an indication WO indicating that the typewriter 1 is placed in the word-error checking mode. The control flow then goes to step S4 to reset or clear the buffer memory 106, the CAPITALIZATION ERROR flag 122 and the HYPHENATION ERROR flag 124. Step S4 is then executed repeatedly until any data is entered through the keyboard 3.

When any key on the keyboard 3 is operated, the control flow goes to step S5 to determine whether any word-separation key for producing word-separation data such as a space, a carriage return, a comma and a period has been operated, or not. If a word-separation key has been operated, step S5 is followed by step S6. If not, step S5 is followed by step S7 of Fig. 5B to determine whether the CANCEL key 20 has been operated or not. If the CANCEL key 20 has been operated, the word-error checking mode is cancelled in step S8, and the word-error checking routine is terminated. That is, the word-error checking mode is established by operating the SPELL CHECK key 17, and is cancelled by operating the CANCEL key 20.

If a negative decision (NO) is obtained in step S7, step S9 is executed to determine whether any character key 4, 5, 6 has been operated or not. If an affirmative decision (YES) is obtained in step S9, the control flow goes to step S10 in which code data or character data corresponding to the operated character key is stored in the buffer memory 106.

Then, step S11 is executed to print the character on the recording paper sheet P. Step S11 is followed by step S4 to wait for the entry of any data through the keyboard 3. If a negative decision (NO) is obtained in step S9, step S12 is implemented to effect data processing associated with the keys other than the character keys.

In the manner described above, a series of character data is stored in the buffer memory 106. When any word-separation data is entered after a series of character data representative of a succession of characters has been stored in the buffer memory 106, an affirmative decision (YES) is obtained in step S5, and the control flow goes to step S6 of Fig. 5A to determine whether data is stored in the buffer memory 106. If a negative decision (NO) is made in step S6, the control flow skips steps S13-S36 and goes to step S37 of Fig. 6B in which the word-separation data is executed. In this example, the character data (i.e., word data representative of a word) has been stored in the buffer memory 106 as indicated above, an affirmative decision (YES) is obtained in step S6, and step S13 is implemented to determine whether the word data stored in the buffer memory 106 include leading symbol data representative of a symbol or symbols (and/or a numeral or numerals) which precede alphabetic data representative of a succession of alphabetic letters. If an affirmative decision (YES) is obtained in step S13, step S14 is executed to store the leading symbol data into the LEADING SYMBOL memory 107. If two or more leading symbols and/or numerals are present in the succession of characters, all of these symbols and/or numerals are stored in the memory 107. Step S13 or S14 is followed by step S15 to determine whether the word data stored in the buffer memory 106 include trailing symbol data representative of a symbol or symbols (and/or a numeral or numerals) which follows the alphabetic data. If a negative decision (NO) is obtained in step S15, step S17 is implemented. If an affirmative decision (YES) is obtained in step S15, step S16 is executed to store all trailing symbol data into the TRAILING SYMBOL memory 108.

In step S17, only the alphabetic data representative of the succession of letters (and the character data representative of one or more hypens, in case of a compound word) are stored in the ALPHABETIC DATA memory 110. Then, the control flow goes to step S18 of Fig. 6A to determine whether data is stored in the memory 110. If an affirmative decision (YES) is obtained in step S18, step S19 is implemented to determine whether the alphabetic data stored in the ALPHABETIC DATA memory 110 represents a correctly spelled word, or not. This determination is effected by checking if the DICTIONARY memory 102 includes a set of word data which represents the succession of characters represented by the alphabetic data stored in the ALPHABETIC DATA memory 110, or not. If an affirmative decision (YES) is obtained in step S19, that is, if the word in the memory 110 is correctly spelled, steps S20-S25 are skipped, and step S26 and subsequent steps are executed to check the word for adequacy of capitalization. If the succession of characters in question is not a correctly spelled word, step S19 is followed by step S20 to determine whether the succession of characters includes a hypen or hypens. If an affirmative decision (YES) is obtained in step S20, steps S22 and S23 are implemented to determine whether a correctly spelled word is constituted if the single hyphen or all the hyphens, or one of the hyphens is/are eliminated. In this respect, it is noted that a hyphen by which two successions of letters of a single word are hyphenated bridging two lines of characters is processed as if it were an alophabetic letter when the hyphen is entered through the keyboard 3. However, the corresponding word data stored in the DICTIONARY memory 102 does not include character data representative of such a hyphen, while the word data include hyphenation data which indicate at least one hyphenation point at which the relevant word may be hyphenated. Accordingly, a negative decision (NO) is obtained in step S19 even if a hyphenated word is correctly spelled. Therefore, steps S22 and S23 are executed to check such hyphenated word for the correct spelling. It will be understood that if step S20 reveals that no hyphen is included in the succession of characters in the buffer memory 106, this means that the succession of characters in question is a misspelled word, or a word unrecognized in the DICTIONARY memory 102. In this case, step S20 is followed by step S21 wherein the display 21 provides an indication "SPELLING ERROR" (Fig. 11) indicating that the relevant succession of characters is a misspelled word.

If one or more hyphens are included in the relevant succession of characters, step S20 is followed by step S22 to determine whether the succession of characters constitutes a correctly spelled word if the single sole hyphen or all the hyphens is/are eliminated. It is noted that a compound word consisting of two words connected by a hyphen may be hyphenated by another hyphen interposed in the latter word of the compound word, at the end of a line. In this case, the latter word of the compound word is divided into two successions of letters connected by a hyphen at the end of the line. In this situation, the compound word includes two hyphens, and the DICTIONARY memory 102 does not include a set of word data representative of a word which consists of the succession of characters without the two hyphens, i.e., which consists of three successions of letters separated by the two hyphens. Therefore, a negative (NO) decision is obtained in step S22. It will be understood that an affirmative decision (YES) is obtained in step S22, only in the case of a succession of characters which includes only one hyphen at the end of a line, i.e., only in the case of a hyphenated word. In this case, the control flow goes to step S24 to determine whether the succession of letters (i.e., correctly spelled word) is correctly hyphenated, or not. This determination is made by referring to the hyphenation data of the word data of the relevant word stored in the DICTIONARY memory 102, to check if the hyphenation points represented by the stored hyphenation data include the position of the hyphen included in the relevant word. If the hyphenation point of the relevant word coincides with one of the hyphenation points designated in the memory 102, the word is correctly hyphenated. If not, the word is not correctly hyphenated, and step S25 is executed to set the HYPHENATION ERROR flag 124.

If a negative decision (NO) is obtained in step S22, that is, if the DICTIONARY memory 102 does not include a set of word data which represents a word obtained by eliminating all the hyphens from the relevant succession of characters stored in the buffer memory 106, then step S23 is executed to determine whether a correctly spelled word is obtained by removing any and only one of the hyphens from the relevant succession of characters. If a correctly spelled word is not obtained by removing a certain one of the hyphens, then this hyphen is returned to the succession of characters, and another hyphen is removed from the succession, to effect a determination in step S23. Thus, two or more determinations are effected by sequentially removing the two or more hyphens. Where a correctly spelled compound word is hyphenated, an affirmative decision (YES) is obtained in step S23 if the hyphen at the end of the line is removed. In this case, step S23 is followed by step S24 to determine whether the compound word is correctly hyphenated, namely, whether the position of the hyphen removed in step S23 is one of the hyphenation points designated in the DICTIONARY memory 102. If a correctly spelled word is not obtained by removing any one of the hyphens from the relevant succession of characters, the succession of characters is a misspelled word, and a negative decision (NO) is obtained in step S23, whereby step S21 is executed to provide the indication "SPELLING ERROR" on the display 21.

Then, the control flow goes to step S26 to determine whether the relevant word is the first word of a sentence, or not. This determination is effected checking if the relevant word is the word which is entered first in a typing operation to prepare a document or text, or if the relevant word is entered following a period. If a negative decision (NO) is obtained in step S26, step S27 is implemented to determine whether the relevant succession of letters (word) is correctly capitalized, or not. This determination is made by referring to the capitalization data of the corresponding word data stored in the DICTIONARY memory 102, which capitalization data represents the position or positions of the letter or letters which should be capitalized. The word data of a word which does not include any capital or upper case letter also include capitalization data. If the relevant word is not correctly capitalized, namely, if a letter or letters of the word that should be lower-cased is/are erroneously capitalized or if a letter or letter of the word that should be capitalized is/are erroneously lower-cased, a negative decision (NO) is obtained in step 27, and step S30 is executed to set the CAPITALIZATION ERROR flag 122. On the other hand, an affirmative decision (YES) is obtained in step S27 if the word is correctly capitalized or correctly consists of lower-case letters only. In this case, the control flow goes to step S31.

Where the relevant word is the first word of a sentence, step S26 is followed by step S28 to determine whether the first letter of the first word is capitalized or not. Since the first letter should be capitalized, a negative decision (NO) is obtained in step S28 if the first letter is not actually capitalized. In this case, step S30 is executed to set the CAPITALIZATION ERROR flag 122. If the first letter is capitalized, step S28 is followed by step S29 to determine whether the letters of the word except for the first letter are correctly capitalized. If not, the CAPITALIZATION ERROR flag 122 is set in step S30 before step S31 (Fig. 6B) is executed. If an affirmative decision (YES) is obtained in step S29, the control flow goes directly to step S31.

As described above, the word-error checking operation is performed in terms of the three types of errors associated with a succession of characters stored in the buffer memory 106, i.e., normal spelling error (step S21), hyphenation error, and capitalization error. If one or more of these three types of errors have been detected, the display 21 provides an indication indicating the type or types of error. If both the capitalization error and the hyphenation error exit, an affirmative decision (YES) is obtained in both of steps S31 and S32, whereby the display 21 provides in step S33 an indication "CAPITALIZATION HYPHENATION ERROR" as indicated in Figs. 13(a) and 13(b). Further, the relevant erroneous word which includes at least one of the three types of errors is highlighted on the display 21, such that the area surrounding the letters of the word is illuminated, contrary to the normal manner of displaying characters by illuminating the letters againt the comparatively dark background.

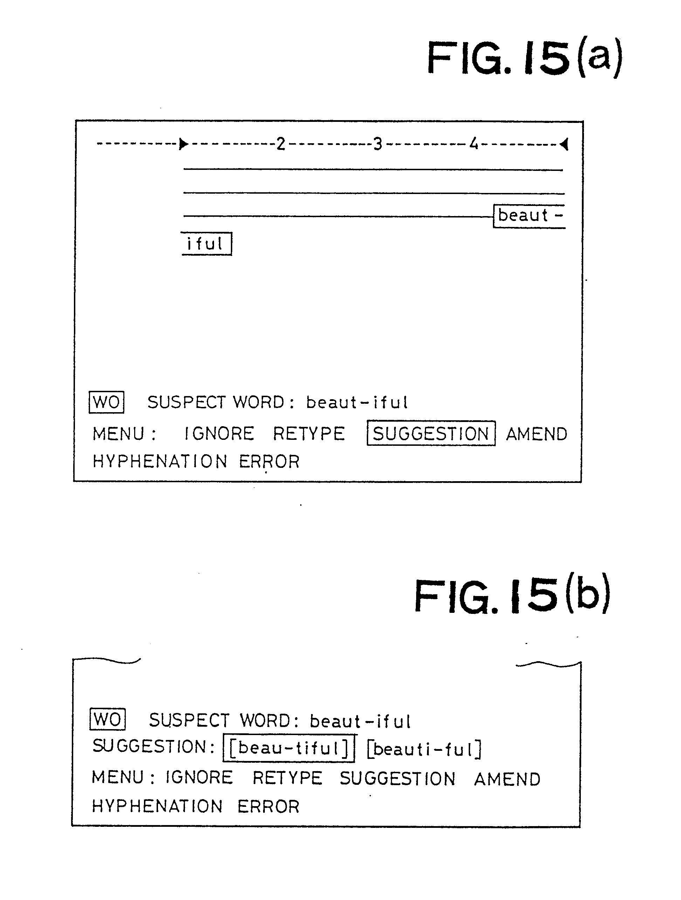

Where the word is erroneously capitalized but is correctly hyphenated or is not a hyphenated word, an affirmative decision (YES) is obtained in step S31 and a negative decision (NO) is obtained in step S32, whereby step S34 is implemented to cause the display 21 to provide an indication "CAPITALIZATION ERROR" as indicated in Fig. 14. Where the word is correctly capitalized or does not include any upper-case letter but is erroneously hyphenated, a negative decision (NO) is obtained in step S31 and an affirmative decision (YES) is obtained in step S35, wherebty step S36 is implemented to cause the display 21 to provide an indication "HYPHENATION ERROR" as indicated in Fig. 15(a). Where the word does not have the capitalization error (does not have any upper-case letters) and does not have the hyphenation error (is not a hyphenated word), the negative decisions (NO) are obtained in both steps S31 and S35, whereby step S37 is implemented to execute the word-separation data which terminates the relevant word. For instance, if the word-separation data is spacing data corresponding to the space key 7, the carriage 27 is fed by the predetermined incremental distance to the right, without any printing action. If the CARRIAGE RETURN key 9 is operated to produce the word-separation data, the carriage 27 is returned to the printing start position, and the platen 24 is rotated to advance the paper sheet P to the next print line.

In the following cases, step S38 (Fig. 7) is implemented to activate a suitable alarm buzzer: where the ALPHABETIC DATA memory 110 does not store any data (where the negative decision is obtained in step S18); where the spelling error is constituted (where the negative decision is obtained in step S20 or S23); where the capitalization error is constituted (where the affirmative decision is obtained in step S31); and where the hyphenation error is constituted (where the affirmative decision is obtained in step S32 or S35). In these cases, step S38 is followed by step S39 to reset the DELETE flag 120, and step S40 to cause the display 21 to display the relevant erroneous word (more precisely, the succession of alphabetic letters, and any leading and/or trailing symbols and/or numerals, if any), and provide the word-correction menu which consists of four items, i.e., IGNORE, RETYPE, AMEND and SUGGESTION, which have been discussed, so that the operator may select one of these four modes for dealing with the erroneous word in question.

If the appropriate one of the CURSOR keys 22 is operated to select the desired one of the four modes, an affirmative decision (YES) is obtained in steps S41 and S42, and the cursor on the display 21 is moved to the displayed indication corresponding to the desired mode, whereby the desired mode (IGNORE, RETYPE, AMEND or SUGGESTION) is established. If the operator operates the CARRIAGE RETURN key 9 in this condition, an affirmative decision (YES) is obtained in step S44, and the control flow goes to step S45 to determine the currently established mode, i.e., the mode densignated by the cursor on the display 21. Subsequently, an operation may be performed in the selected mode. If the CANCEL key 20 is operated after the erroneous word is displayed, an affirmative decision (YES) is obtained in step S46, and step S8 is executed to cancel the word-error checking mode. If a key other than the CURSOR keys 22, CARRIAGE RETURN key 9 and CANCEL key 20 is operated, step S47 is executed to activate the alarm buzzer, to inform the operator that the operated key is not currently effective.

The operations in the IGNORE, RETYPE, AMEND and SUGGESTION modes will be described.

When the IGNORE mode is selected, this means that the operator wishes to continue a typing operation without erasing the word which has been determined to be erroneous. Therefore, the indication of the erroneous word on the display 21 is cleared in step S48, and the word-separation data is executed in step S37, as in a normal typing operation.

When the RETYPE mode is selected, the control routine illustrated in the flow chart of Fig. 8 will be performed.

Initially, the control flow goes to step S49 to determine whether the DELETE flag 120 is in the set state or not. Since this flag is not normally placed in the set state, step S49 is followed by step S50 wherein the letters of the erroneous word which was printed on the paper sheet P are sequentially erased. At the same time, the word data stored in the buffer memory 106 is also erased. If the printed erroneous word is preceded or followed by a symbol or symbols and/or a numeral or numerals, these symbols and/or numerals are also erased from the paper sheet P and from the buffer memory 106. Then, step S51 is executed to set the DELETE flag 120, and step S52 is repeatedly executed to wait for a keying-in operation through the keyboard 3. When the operator operates one of the CURSOR keys 22, an affirmative decision (YES) is obtained in the next step S53, and the cursor on the display 21 is moved in step S54, to the appropriate position. When any character key 4, 5, 6 is operated in this condition, an affirmative decision (YES) is obtained in step S52, but a negative decision (NO) is obtained in steps S53, S55 and S56, whereby the control flow goes back to step S5 of Fig. 5A. Consequently, the keyed-in character is printed on the paper sheet P in step S11.

If the operator desires to change the word-correction mode from the once selected RETYPE mode to another mode, the CURSOR key 22 is moved to the appropriate position of the menu on the display 21, and the CARRIAGE RETURN key 9 is operated. As a result, an affirmative decision (YES) is obtained in step $S_{55}$, and the control flow goes to step S57 to determine whether the cursor is placed on any one of the items of the menu displayed on the display 21. If a negative decision (NO) is obtained in step S57, the control flow goes back to step S52. If an affirmative decision (YES) is obtained in step S57, the control flow goes to step S45 of Fig. 7, whereby the mode newly designated by the cursor is established.

If the CANCEL key 20 is operated after the RETYPE mode has been established, the control flow goes to step S8 of Fig. 5B, and the word-error checking mode is cancelled. It is possible that the RETYPE mode is replaced by another mode, which is then replaced by the RETYPE mode. In this case, an affirmative decsion (YES) is obtained in step S49 since the DELETE flag 120 has been placed in the set state in step S51. Therefore, steps S50 and S51 are skipped, and the operation to erase the erroneous word will not occur.

The AMEND mode is selected when the operator wishes to correct the erroneous word by partially amending or editing the word. In this case, the control routine as illustrated in Figs. 9A and 9B will be performed.

Initially, step S58 is executed to determine whether the DELETE flag 120 is in the set state, or not. In the first execution of step S58, a negative decision (NO) is obtained, and the control goes to step S59 to erase the printed erroneous word, and step S60 to set the DELETE flag 120. Subsequently, step S61 is implemented to move the cursor to the first character of the word displayed on the display 21. Step S62 is repeatedly executed until any data is keyed in. When the appropriate CURSOR key 22 is operated by the operator, an affirmative decision (YES) is obtained in steps S62 and S63, and the cursor is moved in step S64. Thus, the cursor is automatically moved to the first character of the erroneous word displayed on the display 21, when the AMEND mode is selected. Then, the operator may move the cursor to a desired position of the displayed word, by using the appropriate CURSOR key 22.

Subsequently, the operator keys in a desired character, and a negative decision (NO) is obtained in steps S63, S65, S66 and S67 (Fig. 9B), while an affirmative decision (YES) is obtained in step S68. Accordingly, the control flow goes to step S69 wherein the character (letter) designated by the cursor on the display 21 is replaced by the newly entered character, and the cursor is moved one position to the right. The control then goes back to step S62 (Fig. 9A).

With the above-indicted steps repeatedly executed, the erroneous word may be corrected, and the operator operates the CARRIAGE RETURN key 9. As a result, an affirmative decision (YES) is obtained in step S66, and step S70 is implemented to determine whether the cursor designates a word, that is, whether the cursor is placed at the position of any one of the characters of the word. If an affirmative decision (YES) is obtained in step S70, the cursor-designated word is printed in step S71, and the control flow goes back to step S37 of Fig. 6B. However, if the cursor does not designate any character of the word, the control flow goes back to step S62.

When the operator wishes to delete one of the characters of the erroneous word displayed on the display 21, the DELETE key 18 is operated. With the DELETE key 18 operated, a negative decision (NO) is obtained in steps S63, S65 and S66, and an affirmative decision (YES) is obtained in step S67, whereby step S72 is implemented to delete the cursor-designated character of the displayed word and to shift one position leftwardly the characters which are located to the right of the erased character. Then, the control flow goes back to step S62.

When the operator wishes to change the AMEND mode to another mode, the appropriate CURSOR key 22 is operated to move the cursor to the desired item of the word-correction menu displayed on the display 21, and the CARRIAGE RETURN key 9 is operated. As a result, an affirmative decision (YES) is obtained in step S65 and S73, and the control flow goes to step S45 of Fig. 7. Thus, the AMEND mode is changed to the desired mode.

When the CANCEL key 20 is operated while the cursor is placed on the menu, an affirmative decision (YES) is obtained in step S65 and a negative decision (NO) is obtained in step S73, while an affirmative decision (YES) is obtained in step S74. As a result, the control flow goes to step S8 of Fig. 5B, whereby the word-error checking mode is cancelled. The cancellation of the word-error checking mode is also possible by operating the CANCEL key 20 while the cursor is placed at any one of the characters of the displayed word. In this case, an affirmative decision (YES) is obtained in step S62, and a negative decision (NO) is obtained in steps S63, S65, S66, S67 and S68. Then, an affirmative decision (YES) is obtained in step S74, whereby step S8 is executed to cancel the word-error checking mode.

When the operator selects the SUGGESTION mode to cause the display 21 to display the erroneous word, and a list of candidate correct words which may replace the erroneous word, the control routine of Figs. 10A and 10B will be executed.

Initially, steps S75-S77 are executed to erase the printed erroneous word and set the DELETE flag 120, as in the RETYPE and AMEND modes. Then, step S78 is executed to determine whether any candidate correct word for the erroneous word is present or not, more specifically, whether the DICTIONARY memory 102 stores word data which represent words whose spellings are similar to that of the erroneous word. If such word data is present in the DICTIONARY memory 102, the control flow goes to step S79 wherein all the candidate correct words are displayed on the display 21, and to step S80 which is repeatedly executed until any data is entered. As indicated in Fig. 11, a list of candidate correct words is provided on the display 21, together with a symbol or symbols if the erroneous word is preceded or followed by the symbol or symbols. Namely, the candidate words found in the DICTIONARY memory 103 are displayed, together with the symbol or symbols stored in the LEADING SYMBOL memory 107 and TRAILING SYMBOL memory 108. As described above, the erroneous word preceded or followed by a symbol or symbols is erased together with such symbol or symbols. Similarly, the candidate words for such an erroneous word are displayed together with the symbol or symbols. It is noted that the display 21 provides the word-correction menu and the erroneous word, as well as the candidate correct words.

If the appropriate CURSOR key 22 is operated by the operator, an affirmative decision (YES) is obtained in step S81, and step S82 is executed to move the cursor on the display 21. When the operator then operates the CARRIAGE RETURN key 9, an affirmative decision (YES) is obtained in step S83, and step S84 is implemented to determine whether the cursor is placed at the position of any one of the displayed candidate correct words. If an affirmative decision (YES) is obtained in step S84, step S85 is executed to print the cursor-designated candidate correct word. If the candidate correct word designated by the cursor is preceded or followed by a symbol or symbols, the symbol or symbols is/are also printed.

If the displayed list of candidate correct words does not include a desired word, or if the operator desires to change the SUGGESTION mode to another mode, the appropriate CURSOR key 22 is moved to the appropriate item of the menu on the display 21, and the CARRIAGE RETURN key 9 is operated. In this case, a negative decision (NO) is obtained in step S84 while an affirmative decision (YES) is obtained in step S86, whereby the control goes back to step S45 of Fig. 7. Thus, the newly designated mode is established. In this case, the indications provided on the display 21 as illustrated in Fig. 11 remain unchanged.

If a negative decision (NO) is made in step S78, namely, if the DICTIONARY memory 102 does not store a candidate word similar to the erroneous word, step S87 is implemented whereby the display 21 provides an indication "Not found" as shown in Fig. 12, to inform the operator that no candidate correct words are present in the DICTIONARY memory 102. Then, step S88 is repeatedly executed to wait for the entry of any data. If any key is operated in this condition, the control flow goes to step S41 of Fig. 7, whereby the SUGGESTION mode may be changed to another mode, i.e., the RETYPE mode to retype the desired correct word, or the AMEND mode to partially amend or edit the erroneous word. After the SUGGESTION mode is replaced by another mode, the indications on the display 21 as illustrated in Fig. 12 remain unchanged.

Even after the SUGGESTION mode has been established, the word-error checking mode can be cancelled by operating the CANCEL key 20. In this case, a negative decision (NO) is obtained in steps S81 and S83, and then an affirmatie decision (YES) is obtained in step S89. As a result, step S8 of Fig. 5B is implemented.

It will be understood from the foregoing explanation that the present typewriter 1 is capable of checking a printed word for the presence of the three different types of errors, i.e., spelling error, capitalization error, and hyphenation error. If any of these types of errors is present for the word, the display 21 indicates the relevant type or types of error. Accordingly, the operator may easily select the suitable mode from the word-correction menu, IGNORE, RETYPE, AMEND and SUGGESTION. When the spelling error is present, either the AMEND mode or the RETYPE mode is selected, if the correct word is known the operator. If both the capitalization error and the hyphenation error are present, the SUGGESTION mode is selected, so that candidate correct words which are correctly capitalized and hyphenated are displayed on the display 21, as illustrated in Fig. 13(b). Since the DICTIONARY memory 102 stores hyphenation data which represent all the hyphenation points for each word having two or more syllables, the differently hyphenated groups of characters are displayed on the display 21 as candidate correct words. When the list of the candidate correct words is provided on the display 21, the cursor is moved to the position of the first candidate correct word.

If the hyphenation error is present, the suitable correct word can be found more easily and quickly by referring to the list of candidate correct words in the SUGGESTION mode, than by consulting a dictionary. Therefore, the erroneous word including the hyphenation error may be efficiently replaced by one of the displayed candidate words.

If the erroneous word includes the capitalization error, the word can be usually corrected by amending a part of the word. Therefore, the AMEND mode may be effectively used. If the hyphenation error is present, the SUGGESTION mode is generally preferably selected, as described above, so that the correctly hyphenated groups of characters are suggested on the display 21, as illustrated in Fig. 15(b).

As described above, the presnt typewriter 1 enables the operator to conduct an effective manner of correcting a detected error or errors of an entered word, by selecting the most suitable one of the word-correction modes from the menu provided on the display, depending upon the indicated type of error or types of errors of the relevant erroneous word. Thus, the typewriter 1 permits a significant improvement in the processing and preparation of a text or a document. Without the indication of the type or types of errors of the entered word, the operator must spend some time in determining the type or types of errors and then selecting the word-correction mode most suitable in the specific situation. Since the determination of the type or types of errors is usually cumbersome, the operator tends to select the mode in which candidates of a correct word for the detected erroneous word are suggested on the display. In this case, all characters of the erroneous word are replaced by a selected candidate correct word, even where the capitalization of a single character is sufficient to correct a word having a capitalization error. This is time-consuming and results in lowering the overall text processing efficiency. The indication of the type or types of errors of a detected erroneous word according to the principle of the present invention facilitates the selection or determination of the most suitable manner of correcting the error or errors.

As is apparent from the above description, the keyboard 3 serves as input means for entering text data, and the buffer memory 106 serves as memory means for storing the entered text data. Further, the DICTIONARY memory 102, and the portions of the controller C which execute steps S19-S30 of the control routine of Figs. 6A and 6B constitute word-error checking means for checking an entered word in terms of the spelling error, capitalization error and hyphenation error. The display 21, display controller 52, and the portions of the controller C which execute steps S22 and S31-36 of Figs. 6A and 6B constitute word-error indicating means for providing an indication indicating the type or types of errors of the detected erroneous word.

The present typewriter 1 is further characterized in that the word-correction modes are available to the operator after an erroneous word is detected by the word-error checking means. Further, the erroneous word is displayed, together with a symbol or symbols and/or a numeral or numerals, if these symbols and/or numerals precede or follow the erroneous word. Another feature of the instant typewriter is the inhibition of execution of word-separation data if the word preceding the word-separation data is detected to be erroneous. These features are described in detail in the above-identified U.S. Patent Application No. 90,364. However, the description of these features is not deemed essential to the understanding of the principle of the present invention.

In the illustrated embodiment, the erroneous word is entirely erased when the AMEND mode is established. However, only the erroneous letters of the word may be erased.

While the illustrated embodiment is adapted such that the operator selects a desired one of the word-correction modes after the type or types of errors of the erroneous word are indicated on the display, it is possible that a suitable one of the word-correction modes is automatically selected upon detection of the erroneous word, depending upon the type or types of errors of the word.

Further, the word-error checking means may check entered words, for the presence of any types of errors, other than the spelling error, capitalization error and hyphenation error which are detected in the illustrated embodiment. It is further noted that the principle of the present invention is applicable to any computer-controlled data processing equipment such as a word processor, other than a typewriter as in the illustrated embodiment.

Further, the text processing system according to the invention may be adapted to check entered data for the presence of a punctuation error and a word-doubling error. The punctuation error is constituted if both a comma and a period successively follow a word, for example. The word-doubling error is constituted if two spellings of a same word successively appear in a text. The punctuation error and the word-doubling error are constituted if the following sentence is entered: "He makes a a mistake,.". In this case, too, the types of errors (punctuation and word-doubling error) and the erroneous punctuation symbol or symbols and the doubled word are indicated on the display.

It is to be understood that the present invention may be embodied with various other changes, modifications and improvements, which may occur to those skilled in the art, which may occur to those skilled in the art.

## Claims

1. A text processing system comprising:
input means for entering text data;
memory means for storing the text data entered through said input means;
word-error checking means for checking a word represented by word data included in said text data, in terms of a plurality of types of errors associated with said word; and
word-error indicating means, operable upon determination by said word-error checking means of the presence of at least one of said types errors of said word, for providing an indication indicating said at least one type of error in the erroneous word.

2. A text processing system according to claim 1, wherein said word-error indicating means provides an indication of said erroneous word, as well as said indication indicating said at least one type of error of the erroneous word.

3. A text processing system according to claim 1 or 2, wherein said plurality of types of errors checked by said word-error checking means comprise at least two types of errors which include a normal spelling error constituted by misspelling of said word, a capitalization error constituted by erroneous capitalization of said word, and a hyphenation error constituted by erroneous hyphenation of said word.

4. A text processing system according to any one of claims 1-3, further comprising a dictionary memory storing multiple sets of word data representative of a multiplicity of words, at least one of said multiple sets of word data comprising character data which represents characters of the corresponding word, without distinction between upper-case and lower-case characters, and capitalization data representative of a position of at least one of said characters of said word which should be capitalized, said word-error checking means checking said word for the presence of said capitalization error, based on said capitalization data.

5. A text processing system according to any one of claims 1-4, wherein said word-error checking means checks whether a character entered through said input means following a period is capitalized or not, and thereby determines whether the first character of said word is capitalized or not, said word-error checking means determining the presence of a capitalization error if said character following said period is not capitalized.

6. A text processing system according to any one of claims 1-5, wherein said word-error checking means checks whether a first character which is entered first through said input means after commencement of entry of said text data is capitalized or not, said word-error checking means determining the presence of a capitalization error if said first character is not capitalized.

7. A text processing system according to any one of claims 1-6, further comprising a dictionary memory storing multiple sets of word data representative of a multiplicity of words, at least one of said multiple sets of word data comprising character data which represents a succession of characters of the corresponding word, and hyphenation data representative of at least one hyphenation point at which said corresponding word is hyphenated at the end of a line of characters, said word-error checking means checking said word data included in said text data stored in said memory means, against said hyphenation data of the corresponding set of word data stored in said dictionary memory, said word-error checking means determining the presence of a hypenation error if a position of a hyphen indicated by said word data in said memory means does not coincide with any one of said at least one hyphenation point represented by said hyphenation data.

8. A text processing system according to claim 7, wherein said multiple sets of word data include at least one set of word data representative of a compound word which consists of two successions of characters and one hyphen connecting said two successions of characters, said word-error checking means checking a word which is stored in said memory means and which includes at least one hyphen, by first determining whether or not said multiple sets of word data stored in said dictionary memory include the word data representative of said word which is stored in said memory means and which includes said at least one hyphen, and then determining, if said mutliple sets of word data do not include the word data representative of said word stored in said memory means, whether said multiple sets of word data include the word data representative of a word which consists of said two successions of characters without said one hyphen.

9. A text processing system according to claim 8, wherein if said compound word stored in said memory means includes a plurality of hyphens, said word-error checking means determines whether said multiple sets of word data stored in said dictionary memory include the word data representative of any one of words which consist of successions of characters and at least one hyphen which is selected by selectively eliminating one of said plurality of hyphens one after another.

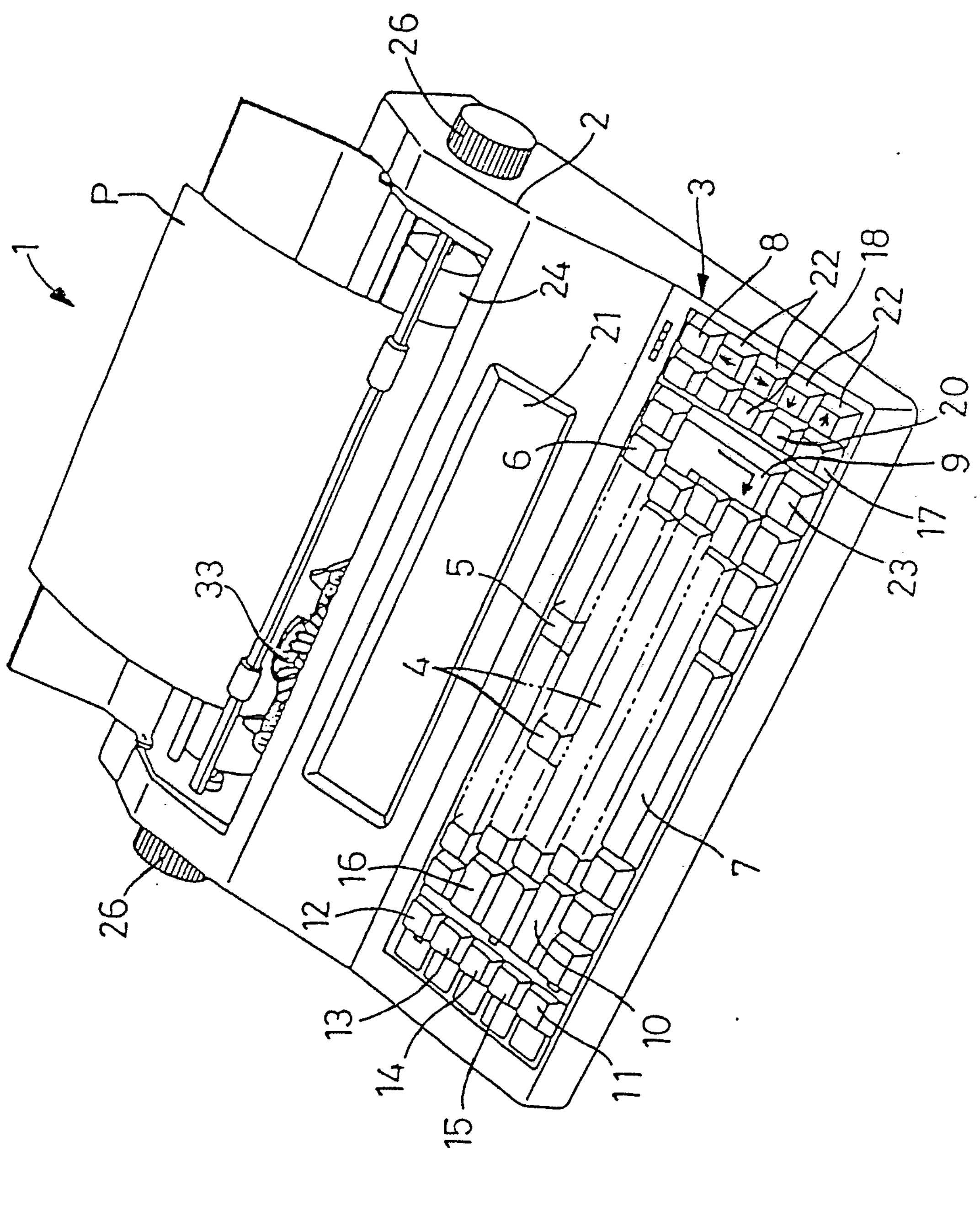


FIG. 1

FIG. 2

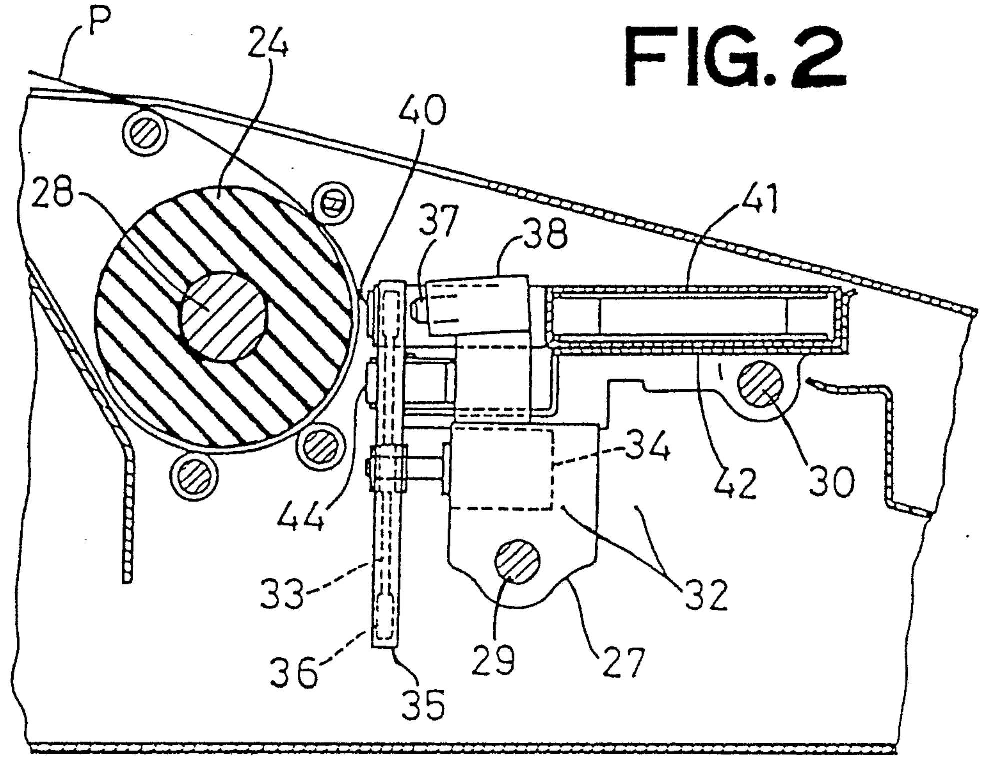
P
24
40
28
41
37
38
34
42
30
44
33
32
36
29
27
35

FIG. 3

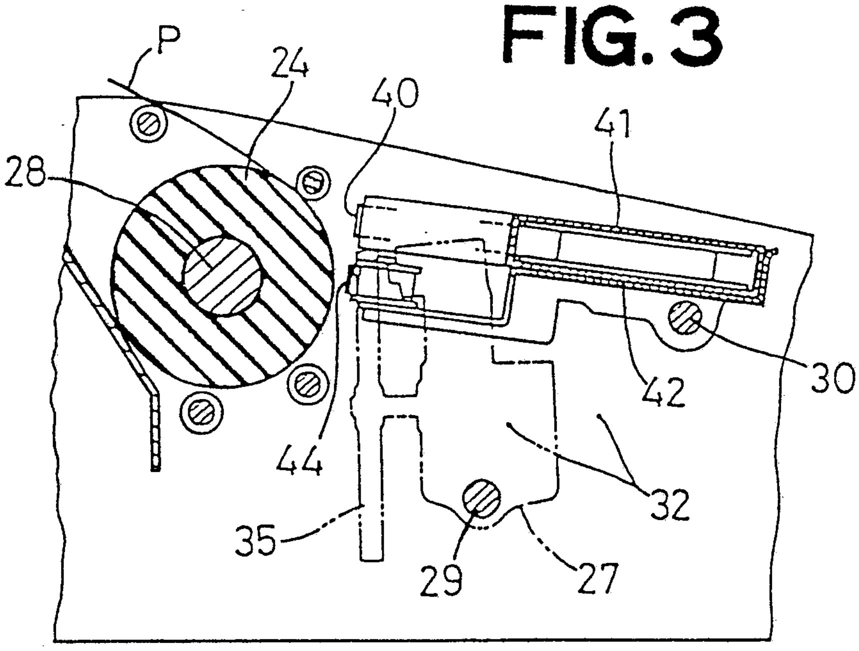
P
24
40
41
28
30
42
44
32
35
29
27

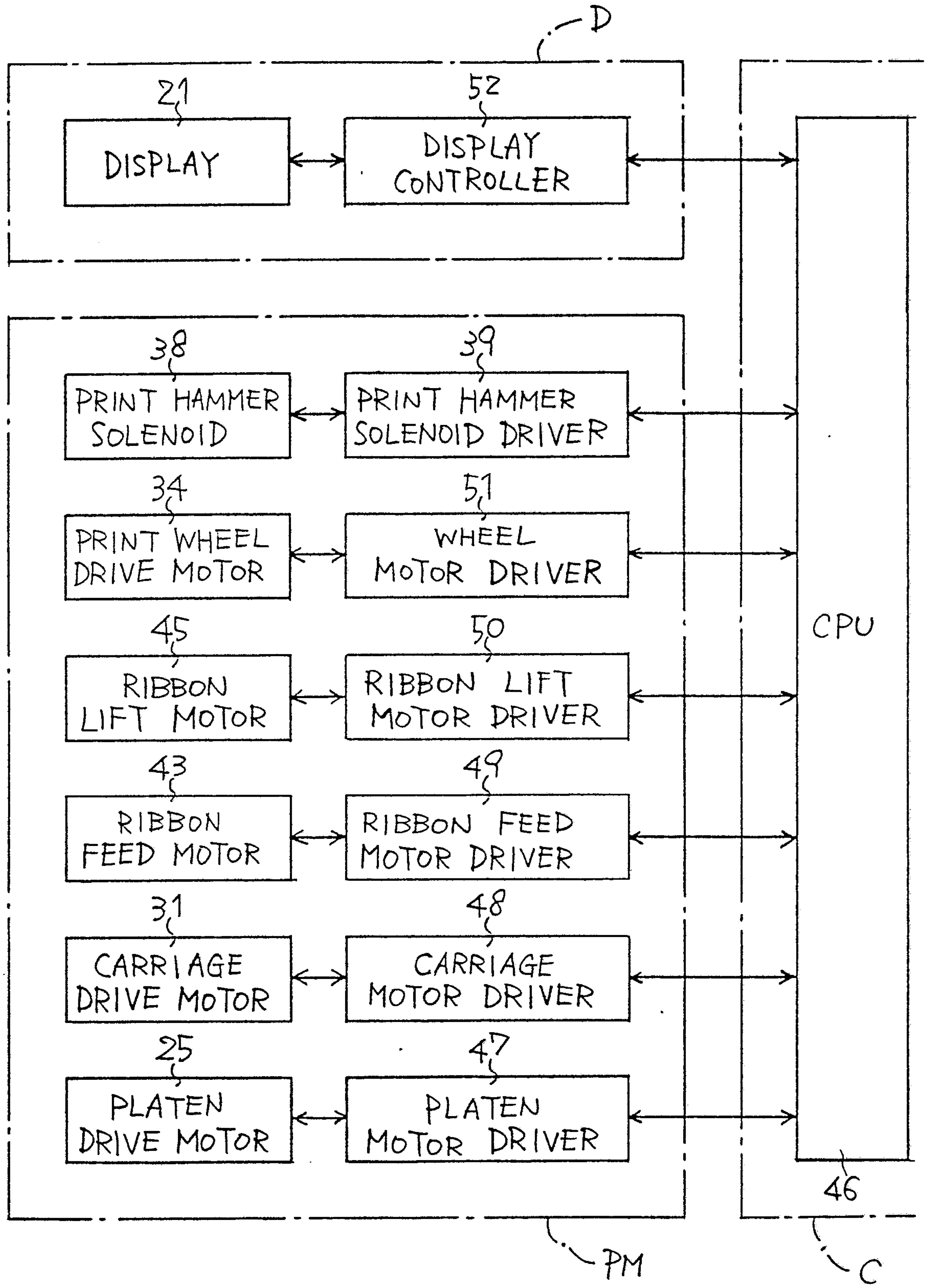
D
21
DISPLAY
52
DISPLAY CONTROLLER
38
PRINT HAMMER SOLENOID
39
PRINT HAMMER SOLENOID DRIVER
34
PRINT WHEEL DRIVE MOTOR
51
WHEEL MOTOR DRIVER
45
RIBBON LIFT MOTOR
50
RIBBON LIFT MOTOR DRIVER
43
RIBBON FEED MOTOR
49
RIBBON FEED MOTOR DRIVER
31
CARRIAGE DRIVE MOTOR
48
CARRIAGE MOTOR DRIVER
25
PLATEN DRIVE MOTOR
47
PLATEN MOTOR DRIVER
CPU
46
PM
C

FIG. 4A

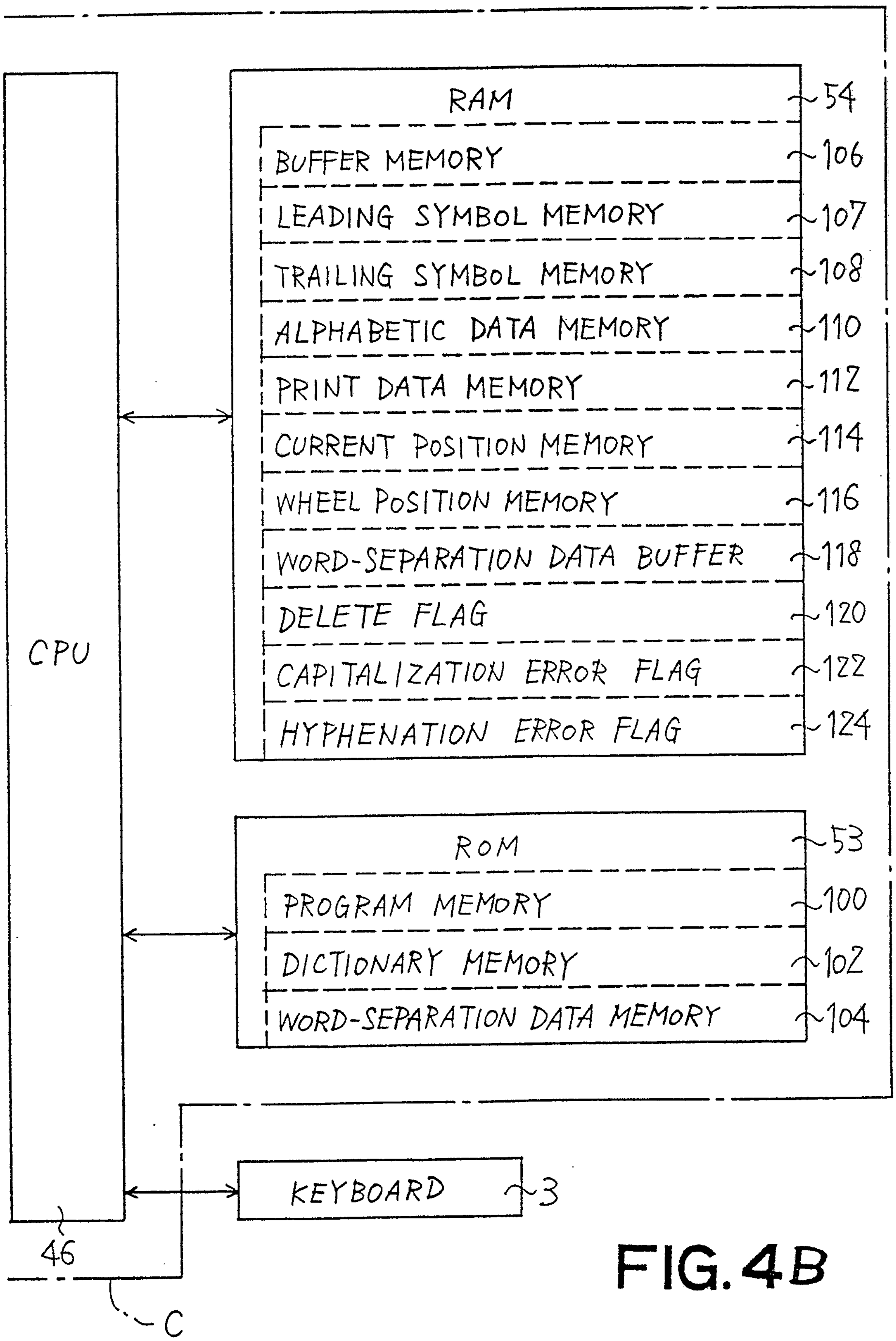
RAM
54
BUFFER MEMORY
106
LEADING SYMBOL MEMORY
107
TRAILING SYMBOL MEMORY
108
ALPHABETIC DATA MEMORY
110
PRINT DATA MEMORY
112
CURRENT POSITION MEMORY
114
WHEEL POSITION MEMORY
116
WORD-SEPARATION DATA BUFFER
118
DELETE FLAG
120
CAPITALIZATION ERROR FLAG
122
HYPHENATION ERROR FLAG
124
CPU
ROM
53
PROGRAM MEMORY
100
DICTIONARY MEMORY
102
WORD-SEPARATION DATA MEMORY
104
KEYBOARD
3
46
C

FIG. 4B

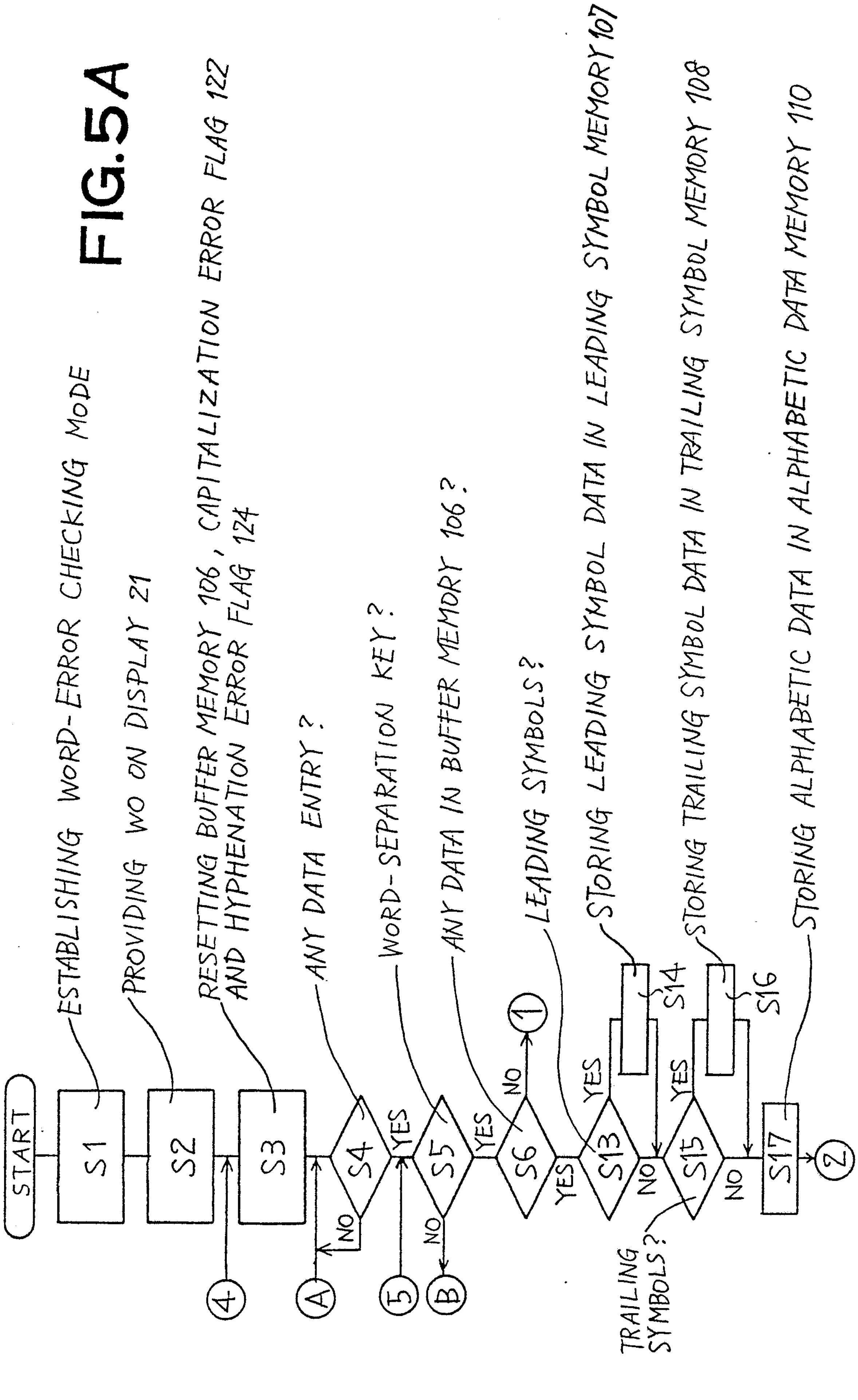
START
S1
ESTABLISHING WORD-ERROR CHECKING MODE
S2
PROVIDING WO ON DISPLAY 21
S3
RESETTING BUFFER MEMORY 106, CAPITALIZATION ERROR FLAG 122 AND HYPHENATION ERROR FLAG 124
S4
ANY DATA ENTRY ?
S5
WORD-SEPARATION KEY ?
S6
ANY DATA IN BUFFER MEMORY 106 ?
S13
LEADING SYMBOLS ?
S14
STORING LEADING SYMBOL DATA IN LEADING SYMBOL MEMORY 107
S15
TRAILING SYMBOLS ?
S16
STORING TRAILING SYMBOL DATA IN TRAILING SYMBOL MEMORY 108
S17
STORING ALPHABETIC DATA IN ALPHABETIC DATA MEMORY 110
YES
NO
1
2
4
5
A
B

FIG.5A

FIG. 5B

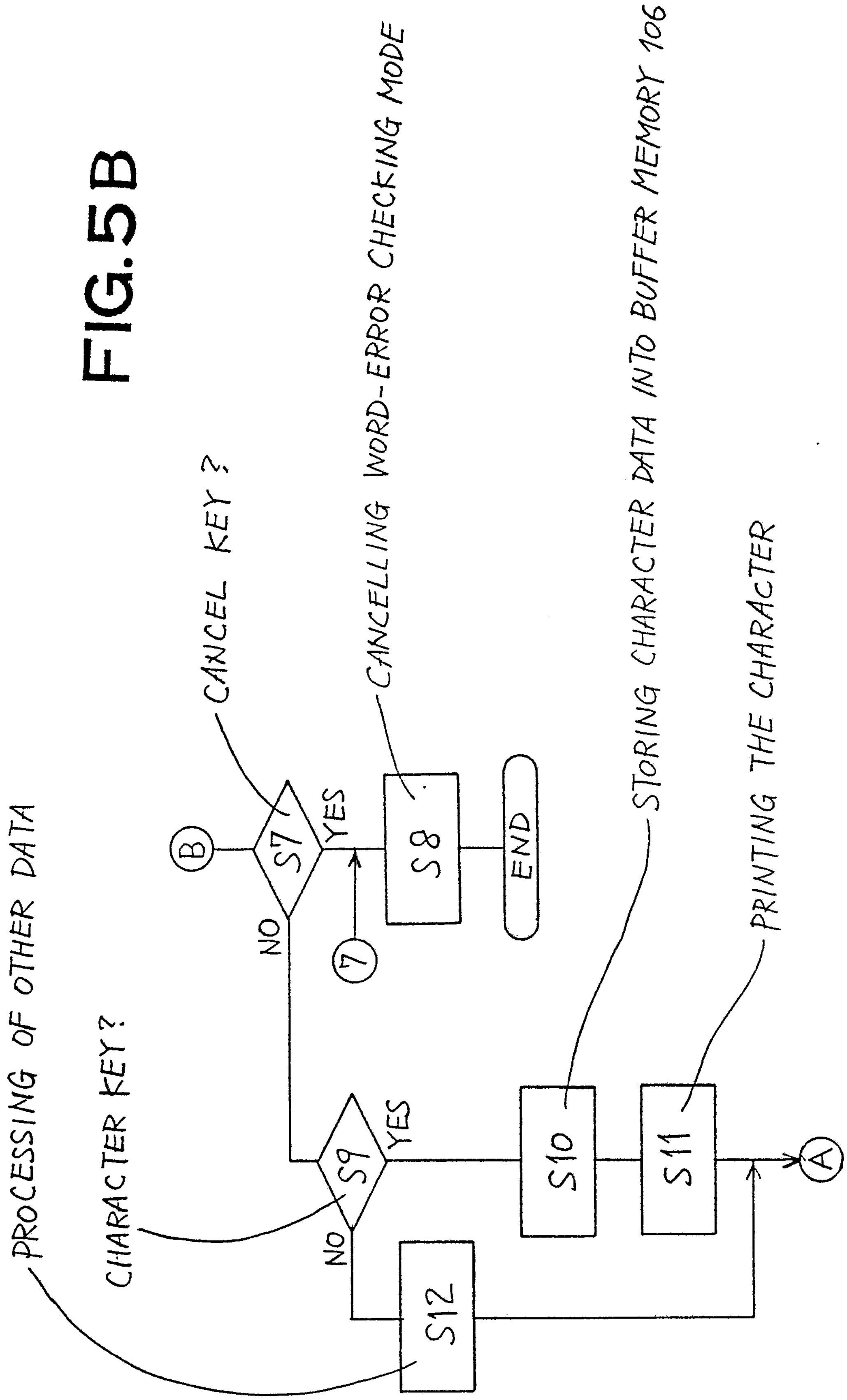
CANCEL KEY ?
CANCELLING WORD-ERROR CHECKING MODE
STORING CHARACTER DATA INTO BUFFER MEMORY 106
PRINTING THE CHARACTER
PROCESSING OF OTHER DATA
CHARACTER KEY ?
B
S7
YES
NO
7
S8
END
S9
YES
NO
S10
S11
A
S12

FIG.6A

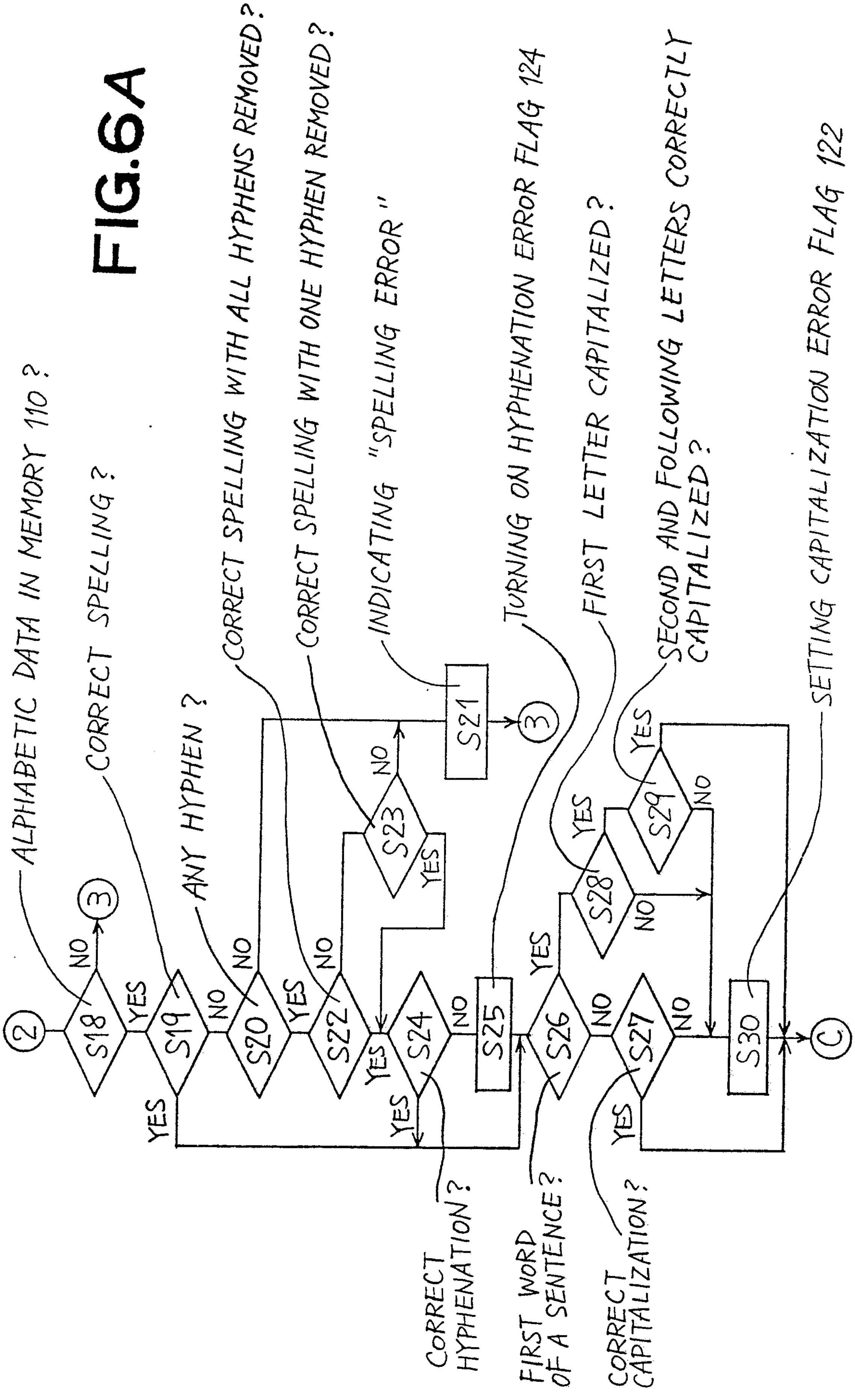
ALPHABETIC DATA IN MEMORY 110 ?
CORRECT SPELLING ?
ANY HYPHEN ?
CORRECT SPELLING WITH ALL HYPHENS REMOVED ?
CORRECT SPELLING WITH ONE HYPHEN REMOVED ?
INDICATING "SPELLING ERROR"
TURNING ON HYPHENATION ERROR FLAG 124
FIRST LETTER CAPITALIZED ?
SECOND AND FOLLOWING LETTERS CORRECTLY CAPITALIZED ?
SETTING CAPITALIZATION ERROR FLAG 122
CORRECT HYPHENATION ?
FIRST WORD OF A SENTENCE ?
CORRECT CAPITALIZATION ?
2
S18
S19
S20
S22
S23
S21
3
S24
S25
S26
S27
S28
S29
S30
C
YES
NO

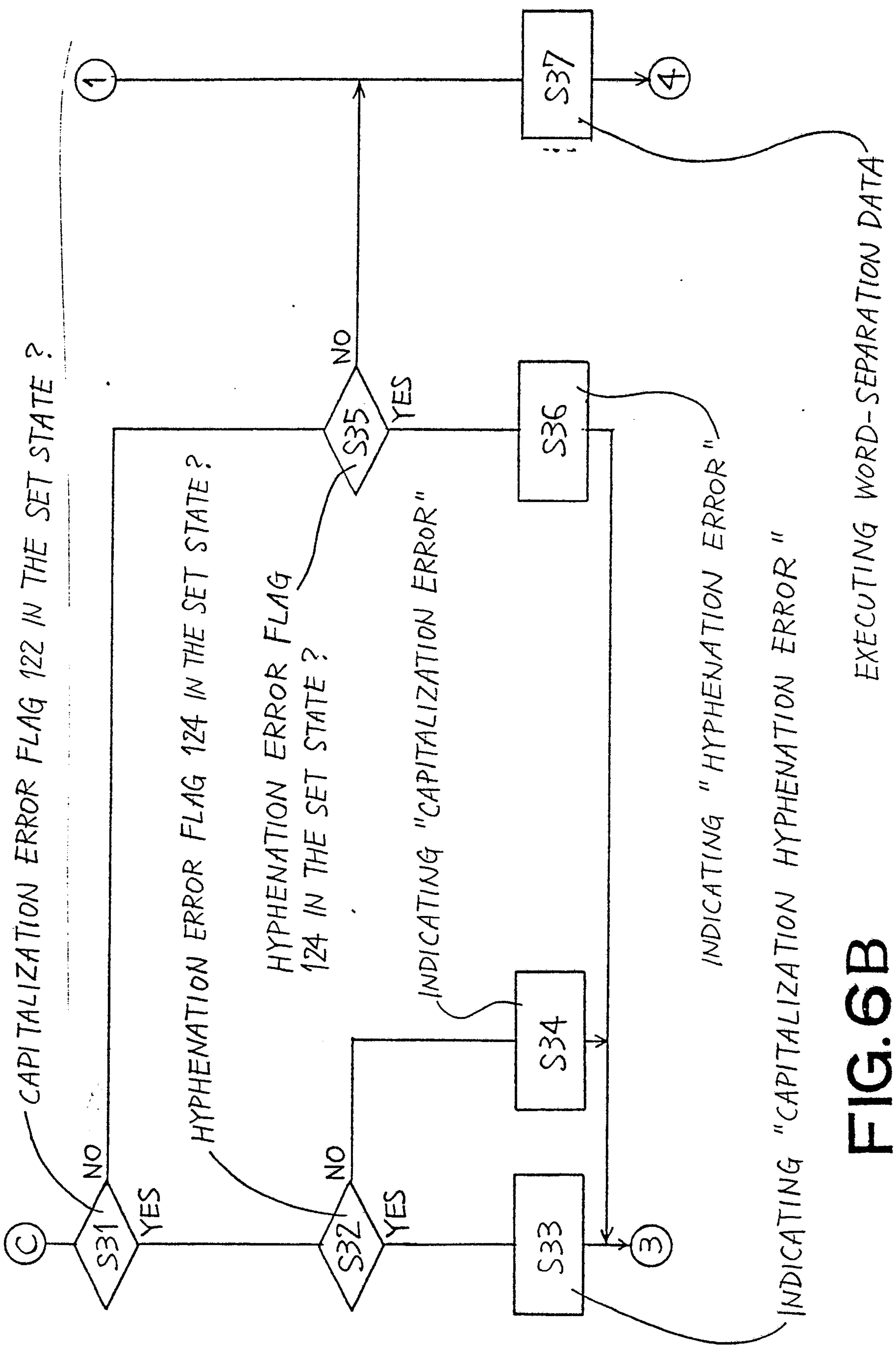
CAPITALIZATION ERROR FLAG 122 IN THE SET STATE ?
HYPHENATION ERROR FLAG 124 IN THE SET STATE ?
HYPHENATION ERROR FLAG 124 IN THE SET STATE ?
INDICATING "CAPITALIZATION ERROR"
INDICATING " HYPHENATION ERROR"
INDICATING "CAPITALIZATION HYPHENATION ERROR"
EXECUTING WORD-SEPARATION DATA
C
S31
S32
S33
S34
S35
S36
S37
YES
NO
1
3
4

FIG.6B

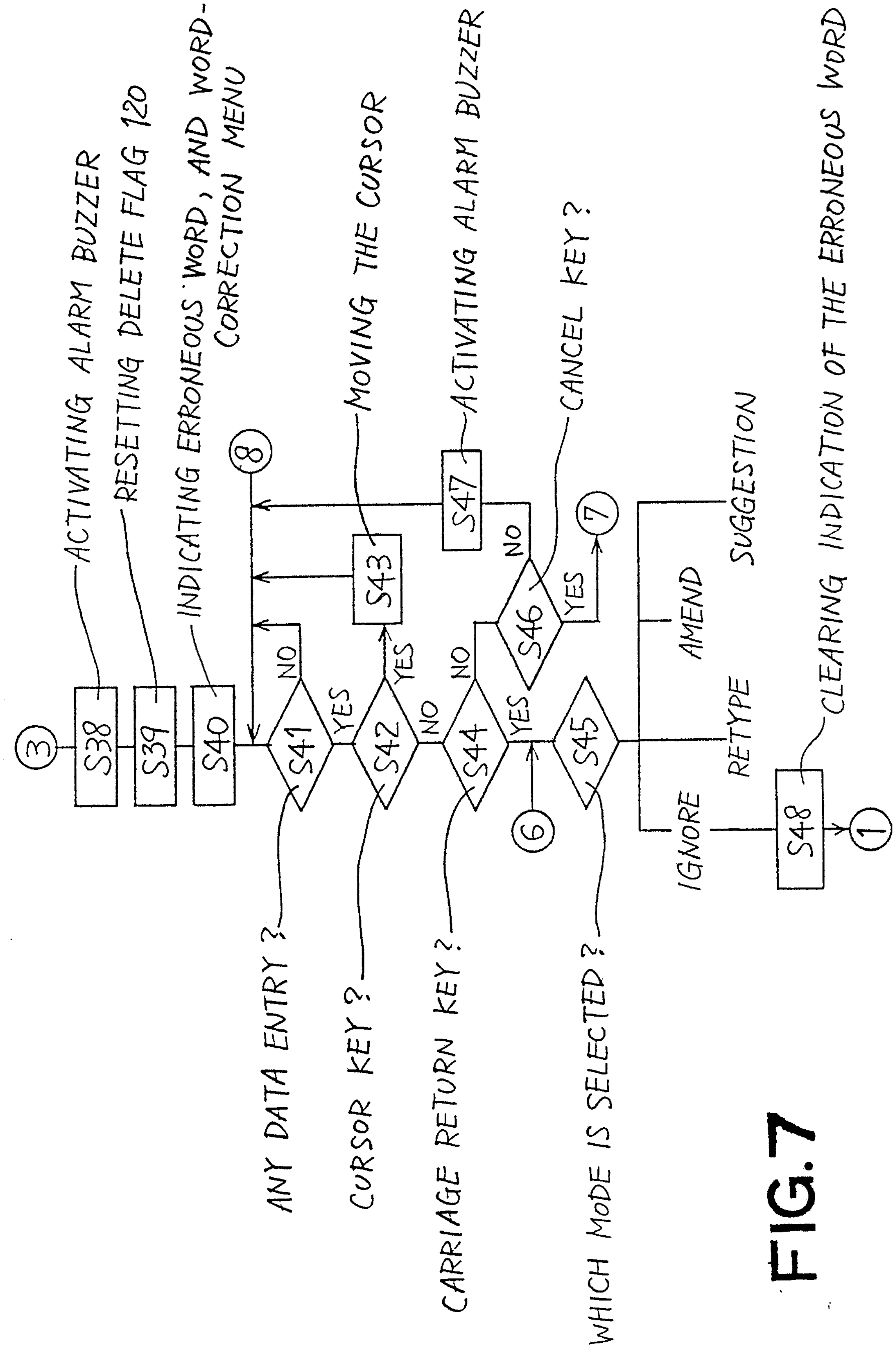
3
S38
ACTIVATING ALARM BUZZER
S39
RESETTING DELETE FLAG 120
S40
INDICATING ERRONEOUS WORD, AND WORD-CORRECTION MENU
8
S41
ANY DATA ENTRY ?
NO
YES
S42
CURSOR KEY ?
YES
S43
MOVING THE CURSOR
NO
S44
CARRIAGE RETURN KEY ?
NO
S46
CANCEL KEY ?
NO
S47
ACTIVATING ALARM BUZZER
YES
7
YES
6
S45
WHICH MODE IS SELECTED ?
IGNORE
RETYPE
AMEND
SUGGESTION
S48
CLEARING INDICATION OF THE ERRONEOUS WORD
1

FIG.7

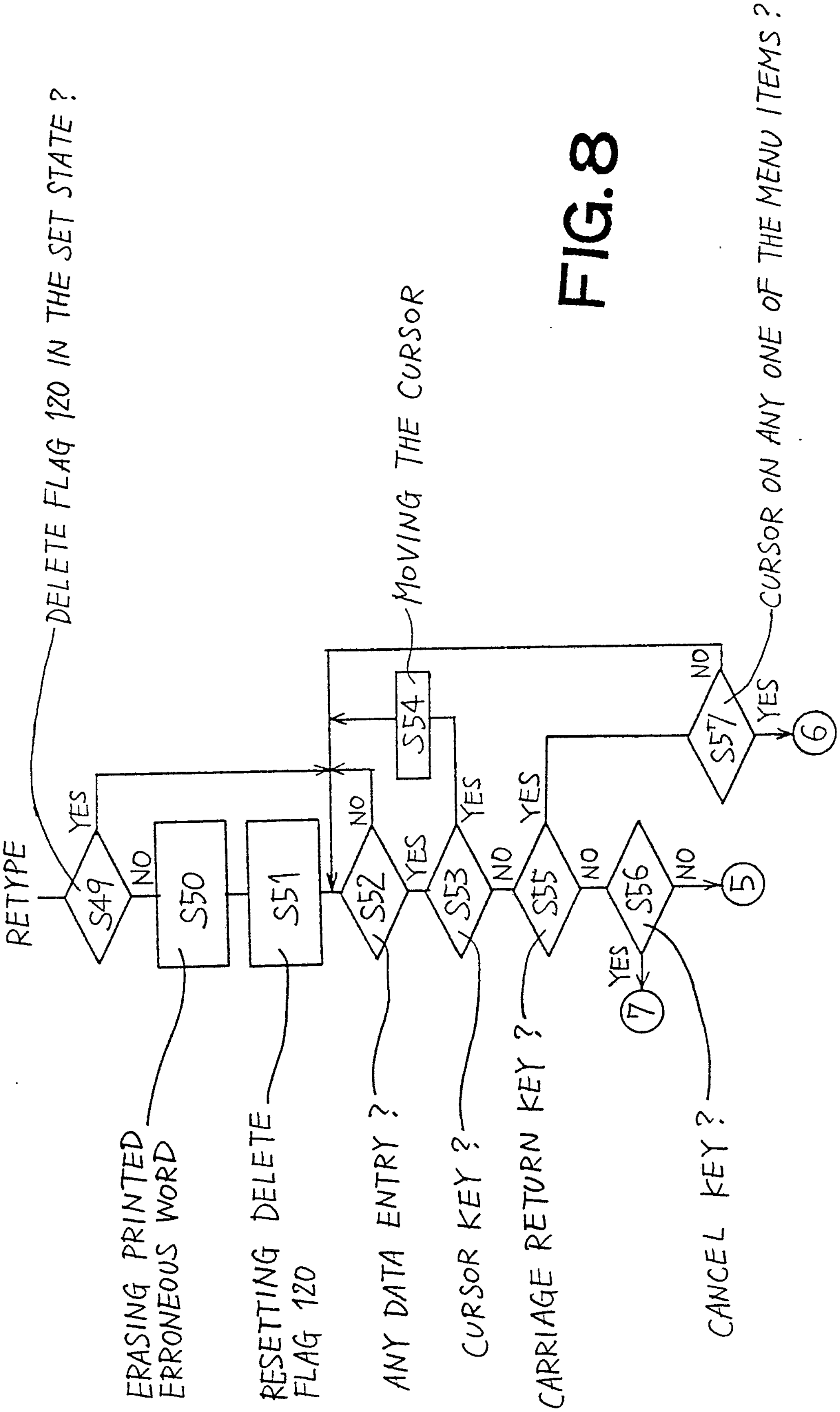
DELETE FLAG 120 IN THE SET STATE ?
MOVING THE CURSOR
CURSOR ON ANY ONE OF THE MENU ITEMS ?
RETYPE
S49
YES
NO
S50
S51
S52
S53
S54
S55
S56
S57
5
6
7
ERASING PRINTED ERRONEOUS WORD
RESETTING DELETE FLAG 120
ANY DATA ENTRY ?
CURSOR KEY ?
CARRIAGE RETURN KEY ?
CANCEL KEY ?

FIG.8

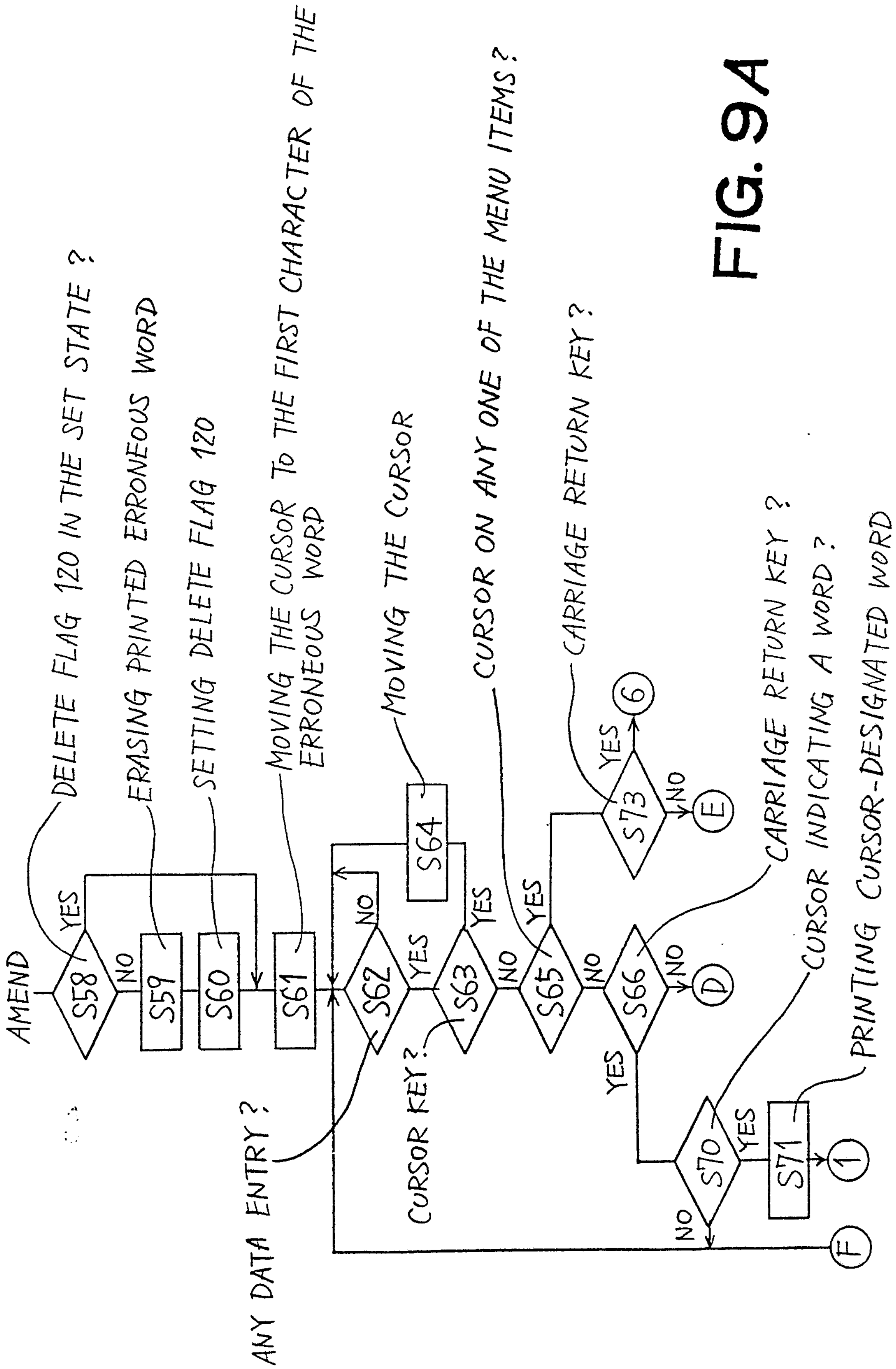

AMEND
S58
DELETE FLAG 120 IN THE SET STATE ?
YES
NO
S59
ERASING PRINTED ERRONEOUS WORD
S60
SETTING DELETE FLAG 120
S61
MOVING THE CURSOR TO THE FIRST CHARACTER OF THE ERRONEOUS WORD
S62
ANY DATA ENTRY ?
S63
CURSOR KEY ?
S64
MOVING THE CURSOR
S65
CURSOR ON ANY ONE OF THE MENU ITEMS ?
S73
CARRIAGE RETURN KEY ?
6
E
S66
CARRIAGE RETURN KEY ?
D
S70
CURSOR INDICATING A WORD ?
S71
PRINTING CURSOR-DESIGNATED WORD
1
F


FIG. 9A

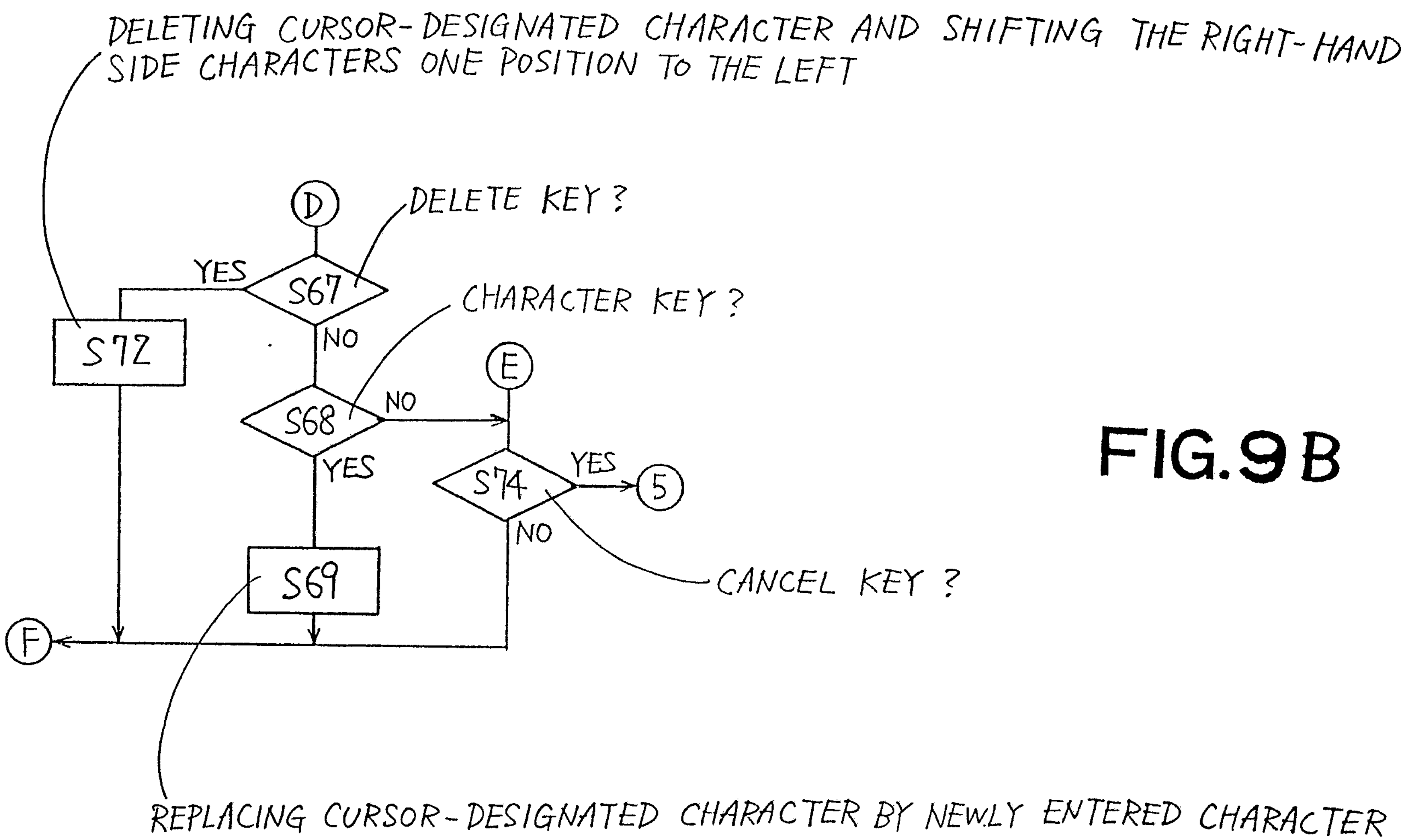
DELETING CURSOR-DESIGNATED CHARACTER AND SHIFTING THE RIGHT-HAND SIDE CHARACTERS ONE POSITION TO THE LEFT
D
DELETE KEY ?
S67
YES
NO
S72
CHARACTER KEY ?
S68
NO
YES
E
S74
YES
5
NO
S69
CANCEL KEY ?
F
REPLACING CURSOR-DESIGNATED CHARACTER BY NEWLY ENTERED CHARACTER

FIG.9B

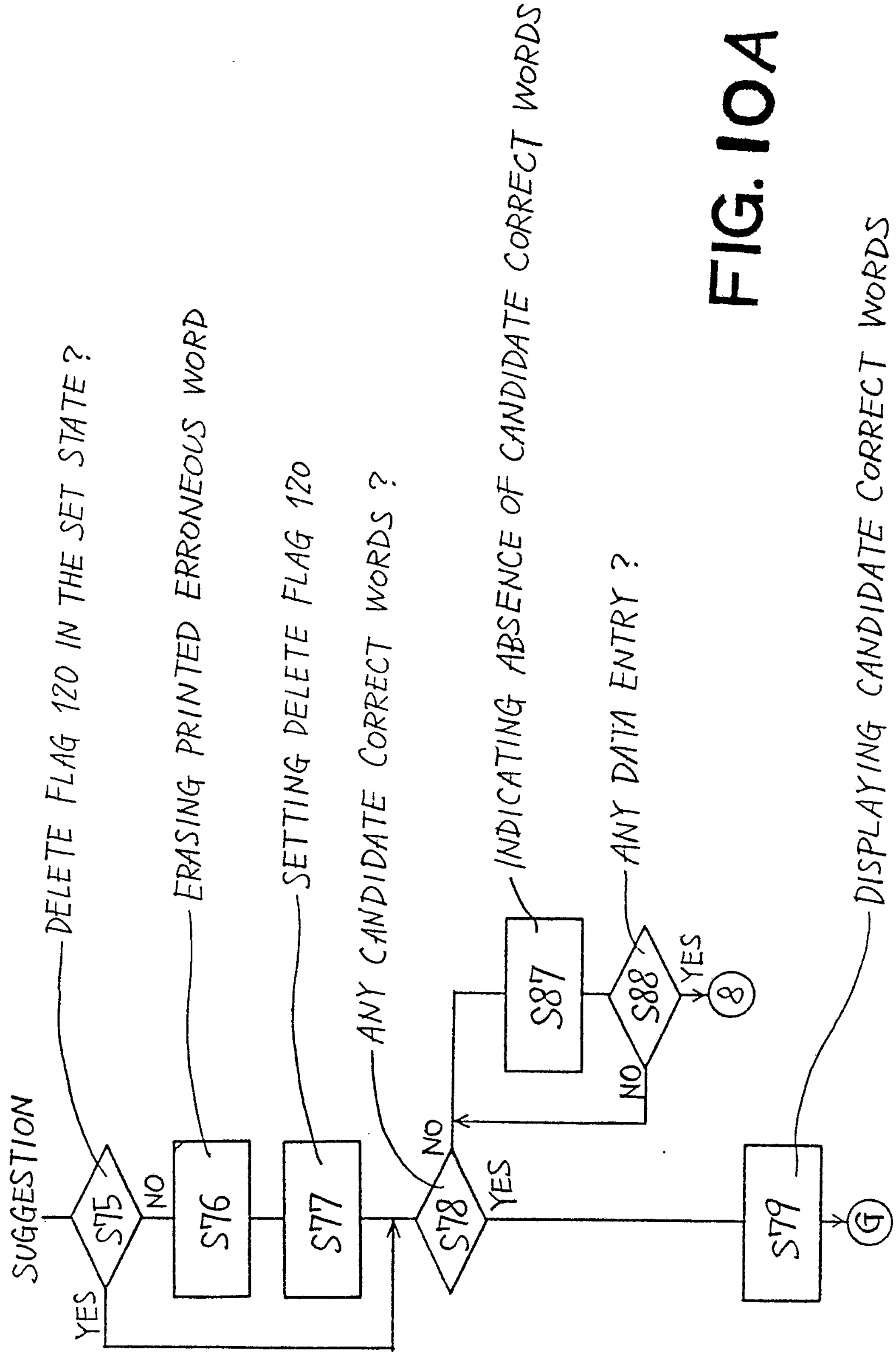
SUGGESTION
S75
DELETE FLAG 120 IN THE SET STATE ?
NO
YES
S76
ERASING PRINTED ERRONEOUS WORD
S77
SETTING DELETE FLAG 120
S78
ANY CANDIDATE CORRECT WORDS ?
NO
YES
S87
INDICATING ABSENCE OF CANDIDATE CORRECT WORDS
S88
ANY DATA ENTRY ?
NO
YES
8
S79
DISPLAYING CANDIDATE CORRECT WORDS
G

FIG. 10A

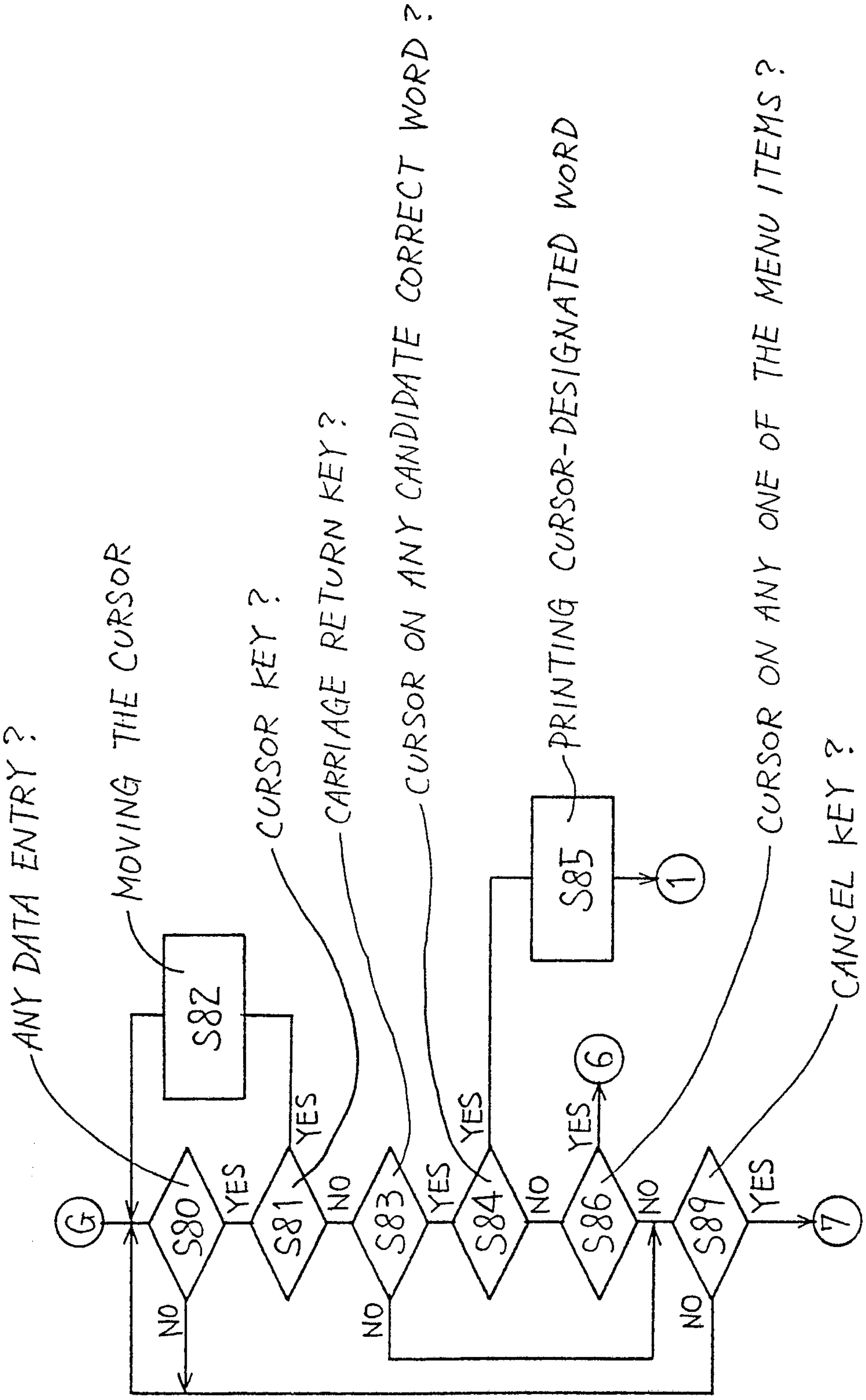
ANY DATA ENTRY ?
MOVING THE CURSOR
CURSOR KEY ?
CARRIAGE RETURN KEY ?
CURSOR ON ANY CANDIDATE CORRECT WORD ?
PRINTING CURSOR-DESIGNATED WORD
CURSOR ON ANY ONE OF THE MENU ITEMS ?
CANCEL KEY ?
G
S80
S81
S82
S83
S84
S85
S86
S89
YES
NO
1
6
7

FIG. 10B

FIG. 11

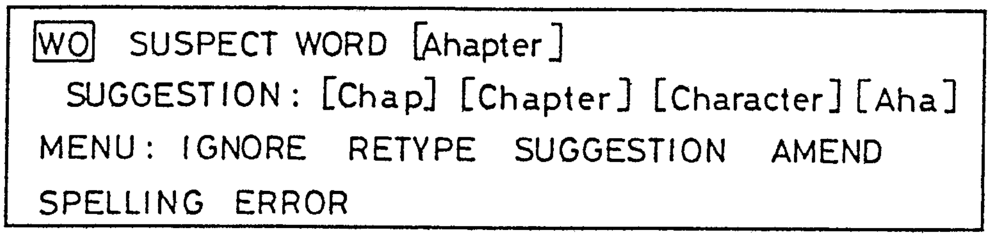


FIG. 12

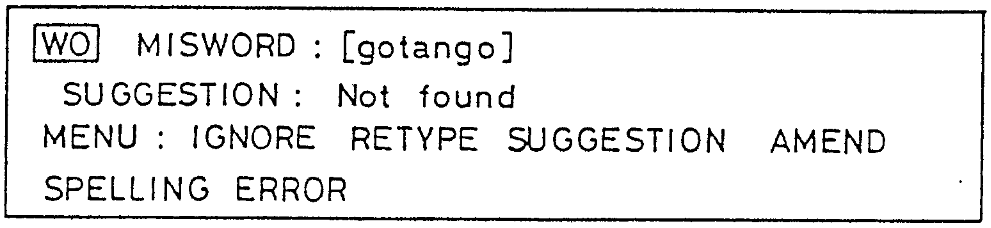


FIG. 14

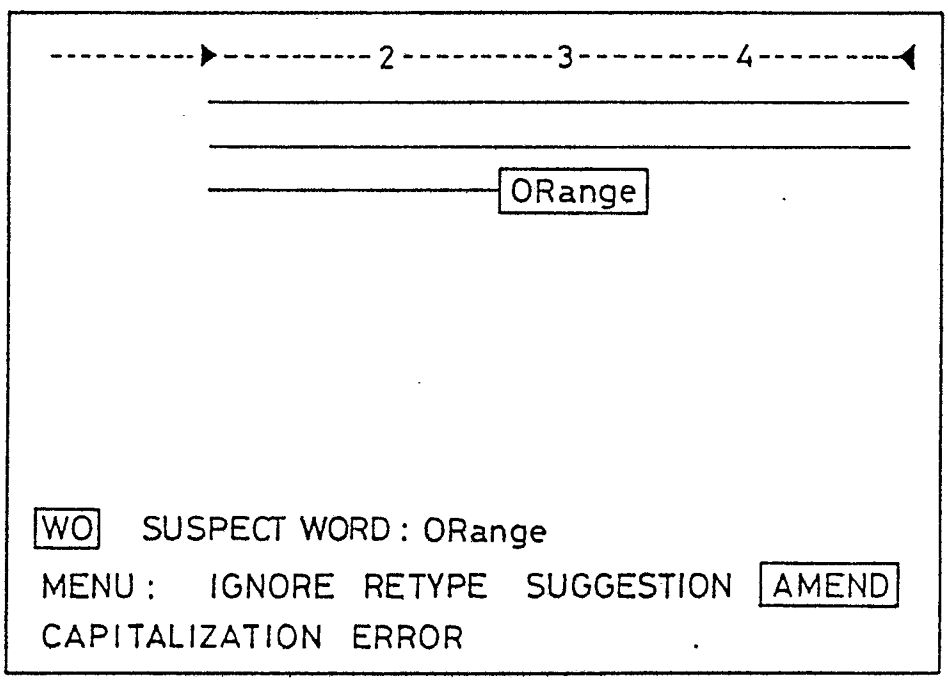

FIG. 13(a)

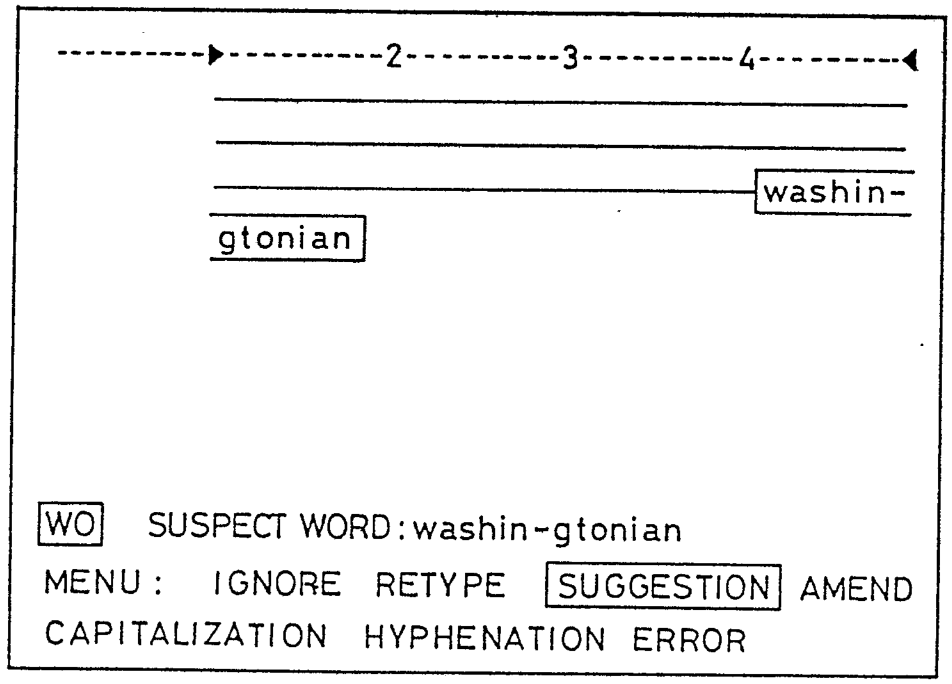


FIG. 13(b)

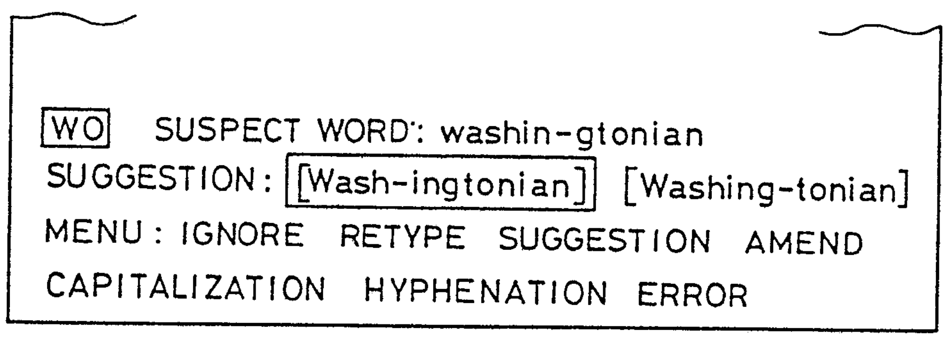

FIG. 15(a)

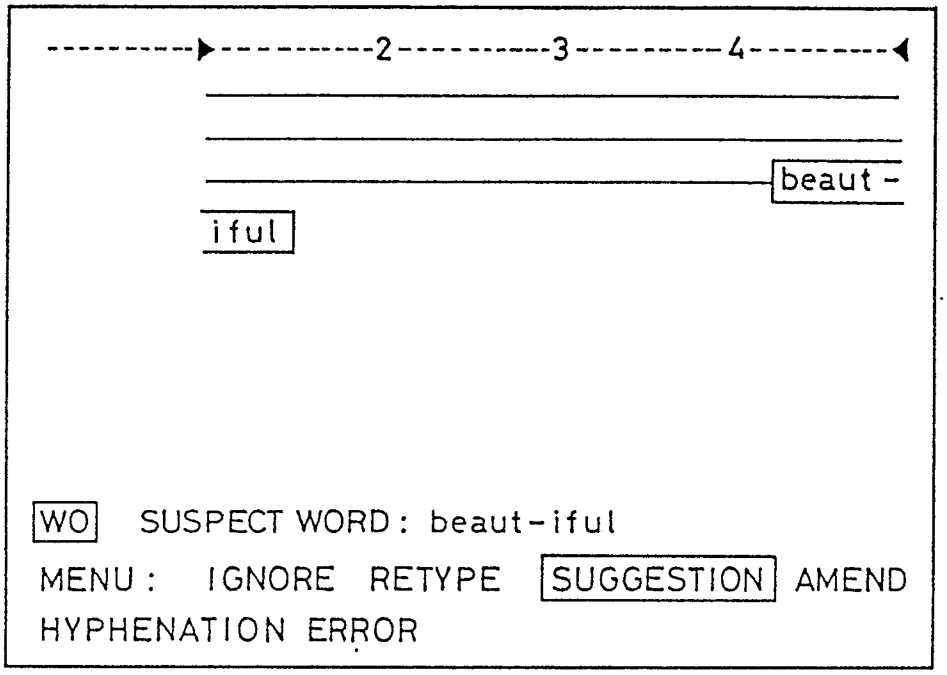


FIG. 15(b)